(19)

Europäisches
Patentamt
European
Patent Office
Office européen
des brevets

(11) **EP 4 700 452 A1**

(12) **EUROPEAN PATENT APPLICATION**
published in accordance with Art. 153(4) EPC

(43) Date of publication:
**25.02.2026 Bulletin 2026/09**

(21) Application number: **24797411.6**

(22) Date of filing: **24.04.2024**

(51) International Patent Classification (IPC):
*G02B 13/00* (2006.01)     *G02B 9/60* (2006.01)
*G02B 1/04* (2006.01)     *H04N 23/55* (2023.01)
*G03B 9/02* (2021.01)

(52) Cooperative Patent Classification (CPC):
**G02B 1/04; G02B 9/60; G02B 13/00; G03B 9/02;
H04N 23/55**

(86) International application number:
**PCT/KR2024/005554**

(87) International publication number:
**WO 2024/225756 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.04.2023   KR 20230053411
16.06.2023   KR 20230077520**

(71) Applicant: **Samsung Electronics Co., Ltd.
Suwon-si, Gyeonggi-do 16677 (KR)**

(72) Inventors:
• **KIM, Hyunjea
Suwon-si, Gyeonggi-do 16677 (KR)**
• **SEO, Jinseon
Suwon-si, Gyeonggi-do 16677 (KR)**
• **BAE, Jaecheol
Suwon-si, Gyeonggi-do 16677 (KR)**

(74) Representative: **HGF
HGF Limited
4th Floor, 1 City Square
Leeds LS1 2ES (GB)**

(54) **LENS ASSEMBLY AND ELECTRONIC DEVICE COMPRISING SAME**

(57)     According to one embodiment of the present disclosure, the provided electronic device comprises: a lens assembly in which at least five sheets of lenses are aligned in the optical axis direction from an object side to an image side, a first lens (L1) from the object side has a negative refractive power, a second lens (L2) from the object side has a positive refractive power, and the first lens from the image side has a negative refractive power; and an image sensor (IS) including an imaging surface (img) on which an image is formed. Additionally, a lens assembly and an electronic device comprising same, according to one embodiment, can be provided.

FIG. 1

**EP 4 700 452 A1**

**Description**

[Technical Field]

Embodiments of the disclosure relate to a lens assembly mountable on a small electronic device, such as a portable terminal or a wearable device. Additionally, they relate to a lens assembly with high-pixel performance and an electronic device including the same.

[Background Art]

Optical devices, such as cameras capable of capturing images or videos, have been widely used. While film-based optical devices were conventionally prevalent, digital cameras and video cameras equipped with solid-state image sensors, such as a charge-coupled device (CCD) or a complementary metal-oxide semiconductor (CMOS), have become widespread. Optical devices employing solid-state image sensors (CCD or CMOS) are gradually replacing film-based optical devices due to the ease of image storage, reproduction, and transfer compared to their film counterparts.

To obtain a high-quality image and/or video, an optical device may include an optical system comprising a lens assembly with a plurality of lenses and an image sensor having a high pixel count. The lens assembly may, for example, obtain a high-quality (high resolving power) image and/or video by having a low F-number Fno and low aberration. To achieve a low F-number Fno and low aberration, in other words, to obtain a bright image with high resolving power, it is necessary to combine multiple lenses. As the image sensor includes more pixels, it may have an increased pixel count, and thus obtain a high-resolution image and/or video. As cameras for portable terminals and wearable devices are required to have high pixel counts in recent years, the size of image sensors has been gradually increasing, which may lead to an increase in the size of the electronic devices. To implement a high-pixel image sensor within the limited mounting space of an electronic device, a plurality of very small pixels, for example, pixels on the order of micrometers, may be arranged. Image sensors including tens of millions to hundreds of millions of micrometer-sized pixels are installed in portable electronic devices such as smartphones and tablets. Such optical devices have recently become essential components of electronic devices providing various services and additional functions, and high-performance optical devices may attract users to purchase electronic devices.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, an electronic device may be provided, including a lens assembly comprising at least five lenses aligned along an optical axis direction from an object side to an image side, and an image sensor including an image plane img on which an image is formed. In the lens assembly, a first lens from the object side may have a negative refractive power, a second lens from the object side may have a positive refractive power, and a first lens from the image side may have a negative refractive power. The lens assembly may satisfy the following [Formula 1] and [Formula 2].

$$[\text{Formula 1}]$$

$$0.3 < \text{L1 ape/ImagH} < 0.45$$

$$[\text{Formula 2}]$$

$$\text{TTL}/(\text{ImagH}*2) < 0.9$$

(where in [Formula 1], L1 ape is a half effective diameter of the first lens from the object side, and ImagH is an effective image height of the image sensor, and in [Formula 2], TTL is a distance from a top surface of a lens barrel to the image sensor).

According to an embodiment of the disclosure, an electronic device may be provided, including a lens assembly having a first lens, a second lens, a third lens, a fourth lens, and a fifth lens which include a synthetic resin material and aligned along an optical axis direction from an object side to an image side, and an image sensor including an image plane

img on which an image is formed. In the lens assembly, the first lens may have a negative refractive power, the second lens may have a positive refractive power, and the fifth lens may have a negative refractive power. The lens assembly may satisfy the following [Formula 1] and [Formula 2].

$$[\text{Formula 1}]$$

$$0.3 < \text{L1 ape/ImagH} < 0.45$$

$$[\text{Formula 2}]$$

$$\text{TTL/(ImagH*2)} < 0.9$$

(where in [Formula 1], L1 ape is a half effective diameter of the first lens from the object side, and ImagH is an effective image height of the image sensor, and in [Formula 2], TTL is a distance from a top surface of a lens barrel to the image sensor).

According to an embodiment of the disclosure, an electronic device may be provided, including a lens assembly having a first lens, a second lens, a third lens, a fourth lens, a fifth lens, and a sixth lens which include a synthetic resin material and aligned along an optical axis direction from an object side to an image side, and an image sensor including an image plane img on which an image is formed. In the lens assembly, the first lens may have a negative refractive power, the second lens may have a positive refractive power, and the sixth lens may have a negative refractive power. The lens assembly may satisfy the following [Formula 1] and [Formula 2].

$$[\text{Formula 1}]$$

$$0.3 < \text{L1 ape/ImagH} < 0.45$$

$$[\text{Formula 2}]$$

$$\text{TTL/(ImagH*2)} < 0.9$$

(where in [Formula 1], L1 ape is a half effective diameter of the first lens from the object side, and ImagH is an effective image height of the image sensor, and in [Formula 2], TTL is a distance from a top surface of a lens barrel to the image sensor).

[Brief Description of Drawings]

The above or other aspects, configurations, and/or advantages related to an embodiment of the disclosure may become apparent from the following detailed description with reference to the accompanying drawings.

FIG. 1 is a configuration diagram illustrating a lens assembly according to an embodiment.

FIG. 2 is a graph illustrating the spherical aberration of the lens assembly according to the embodiment of FIG. 1.

FIG. 3 is a graph illustrating the astigmatism of the lens assembly according to the embodiment of FIG. 1.

FIG. 4 is a graph illustrating the distortion of the lens assembly according to the embodiment of FIG. 1.

FIG. 5 is a configuration diagram illustrating a lens assembly according to an embodiment.

FIG. 6 is a graph illustrating the spherical aberration of the lens assembly according to the embodiment of FIG. 5.

FIG. 7 is a graph illustrating the astigmatism of the lens assembly according to the embodiment of FIG. 5.

FIG. 8 is a graph illustrating the distortion of the lens assembly according to the embodiment of FIG. 5.

FIG. 9 is a configuration diagram illustrating a lens assembly according to an embodiment.

FIG. 10 is a graph illustrating the spherical aberration of the lens assembly according to the embodiment of FIG. 9.

FIG. 11 is a graph illustrating the astigmatism of the lens assembly according to the embodiment of FIG. 9.

FIG. 12 is a graph illustrating the distortion of the lens assembly according to the embodiment of FIG. 9.

FIG. 13 is a configuration diagram illustrating a lens assembly according to an embodiment.

FIG. 14 is a graph illustrating the spherical aberration of the lens assembly according to the embodiment of FIG. 13.

FIG. 15 is a graph illustrating the astigmatism of the lens assembly according to the embodiment of FIG. 13.

FIG. 16 is a graph illustrating the distortion of the lens assembly according to the embodiment of FIG. 13.

FIG. 17 is a block diagram illustrating an electronic device in a network environment according to an embodiment.

FIG. 18 is a block diagram illustrating a camera module according to an embodiment.

Throughout the attached drawings, similar reference numerals may be assigned to similar components, configurations, and/or structures.

[Mode for Carrying out the Invention]

An optical system including a lens assembly and an image sensor may be required to have a compact configuration, forming a bright lens while also having a short optical whole length relative to an image height ImagH (half of the diagonal length of the image sensor) to facilitate portability (e.g., to achieve a slim electronic device including a camera module). However, achieving a bright lens while realizing a slim electronic device may present difficulties in terms of a lens shape or an arrangement method. Moreover, the use of spherical lenses may lead to high product costs and many structures which are not slim or for which mass production feasibility is not considered.

Embodiments of the disclosure may provide a lens assembly and an electronic device which are applicable to a high-pixel image sensor in an optical system including a lens assembly with at least five lenses and an image sensor, and which are designed to minimize an optical whole length relative to an image height.

The technical objects to be achieved by the disclosure are not limited to those mentioned above, and other unmentioned technical objects will be clearly understood by those skilled in the art from the following description.

Hereinafter, embodiments of the disclosure will be described with reference to the accompanying drawings.

An electronic device according to an embodiment of the disclosure may include, for example, at least one of a smartphone, a tablet PC, a mobile phone, a video phone, an e-book reader, a desktop PC, a laptop PC, a netbook computer, a workstation, a server, a PDA, a portable multimedia player (PMP), an MP3 player, a medical device, a camera, or a wearable device. The wearable device may include at least one of an accessory type (e.g., a watch, a ring, a bracelet, an anklet, a necklace, glasses, a contact lens, or a head-mounted-device (HMD)), a fabric or clothing integrated type (e.g., electronic clothing), a body attachment type (e.g., a skin pad or a tattoo), or a bio-implantable circuit. In an embodiment, the electronic device may include, for example, at least one of a television, a digital video disk (DVD) player, an audio device, a refrigerator, an air conditioner, a vacuum cleaner, an oven, a microwave oven, a washing machine, an air purifier, a set-top box, a home automation control panel, a security control panel, a media box (e.g., Samsung HomeSync™, AppleTV™, or Google TV™), a game console (e.g., Xbox™ or PlayStation™), an electronic dictionary, an electronic key, a camcorder, or an electronic photo frame. In an embodiment, the electronic device may be flexible, or a combination of two or more of the various devices described above. The electronic device according to an embodiment of the disclosure is not limited to the devices described above. In an embodiment of the disclosure, the term user may refer to a person using an electronic device or a device (e.g., an artificial intelligence electronic device) using an electronic device. The electronic device according to an embodiment of the disclosure is not limited to the devices described above.

According to an embodiment, an optical device (e.g., a camera module) may be included as a representative example of the electronic device, and the following description may be based on the assumption that a lens assembly is mounted on an optical device as an embodiment.

In describing embodiments of the disclosure, some numerical values may be presented, but it should be noted that these numerical values do not limit the embodiments of the disclosure, unless stated in the claims.

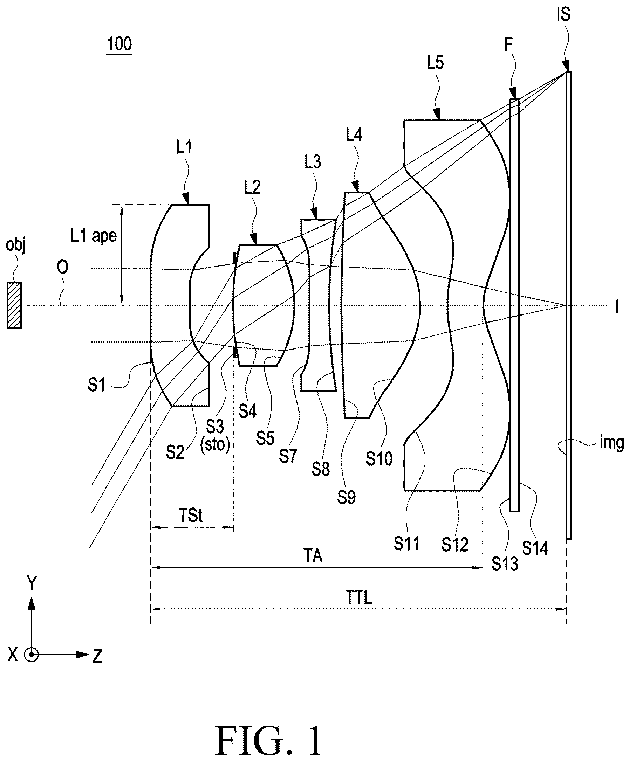

FIG. 1 is a configuration diagram illustrating a lens assembly 100 according to an embodiment.

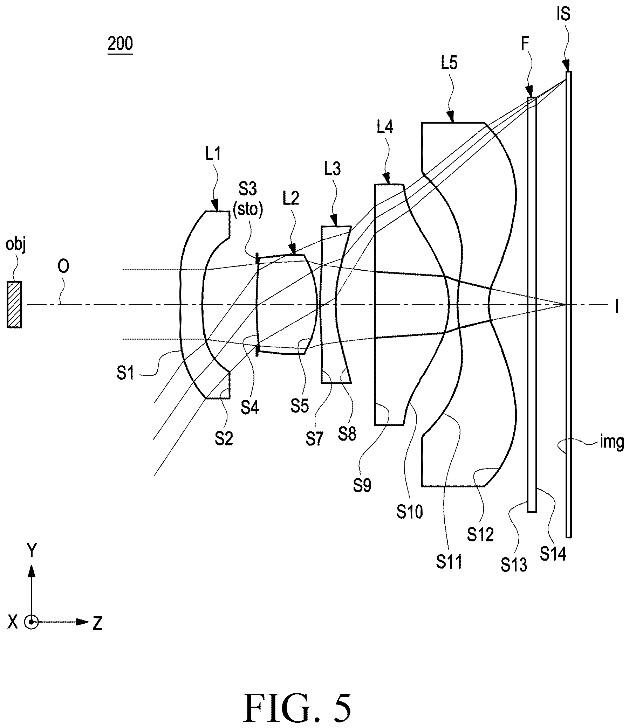

Referring to FIG. 1, the lens assembly 100 may include a plurality of lenses (e.g., L1, L2, L3, L4, and L5) and an image sensor IS. The lens assembly 100 in FIG. 1 is shown as including five lenses. As will be described later, FIG. 5 discloses a lens assembly 200 including five lenses, similar to FIG. 1, and FIGS. 9 and 13 disclose lens assemblies 300 and 400 each including six lenses.

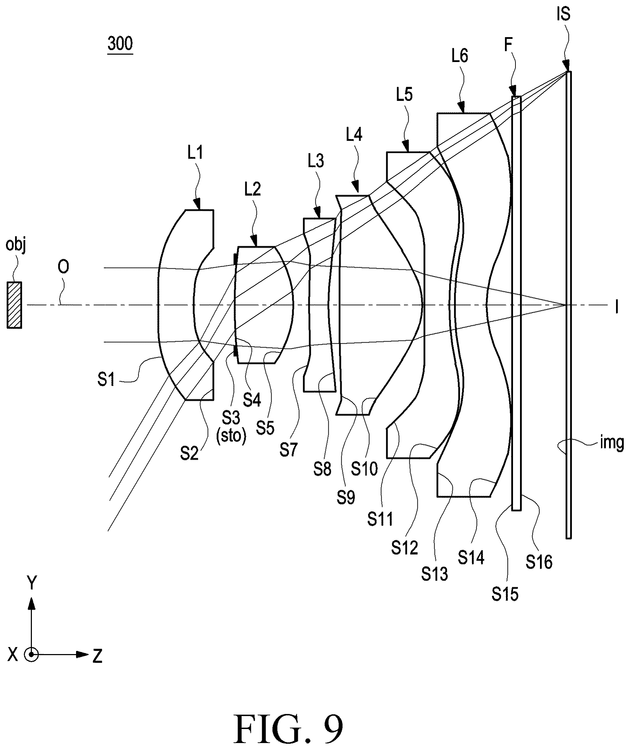

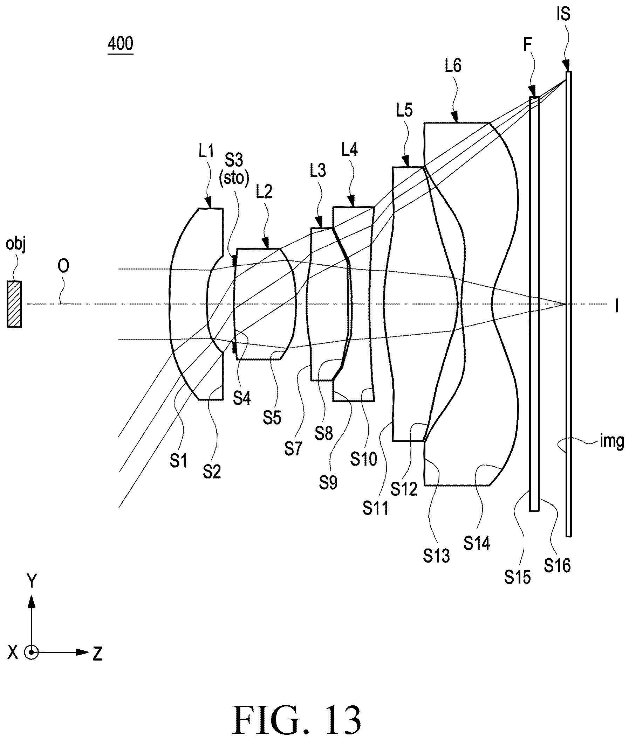

According to an embodiment, the image sensor IS may be mounted on an electronic device. The lens assembly 100 including the plurality of lenses (e.g., five lenses L1, L2, L3, L4, and L5 in the embodiments of FIGS. 1 and 5, and six lenses L1, L2, L3, L4, L5, and L6 in the embodiments of FIGS. 9 and 13) may be mounted on the optical device and/or the electronic device with the image sensor IS mounted thereon. For example, in describing embodiments of the disclosure, an example in which the image sensor IS is provided in the lens assembly 100 will be described, but the image sensor IS may be mounted and used in the optical device and/or the electronic device with the lens assembly 100 mounted thereon.

According to an embodiment, the image sensor IS is a sensor mounted on a circuit board (not shown) and disposed in alignment with an optical axis O-I, and may react to light. The image sensor IS may include, for example, a complementary metal-oxide semiconductor (CMOS) sensor or a charge-coupled device (CCD) sensor. The image sensor IS is not limited thereto and may include, for example, various elements that convert an object image into an electrical video signal. The image sensor IS may obtain an image of an object obj by detecting brightness information, contrast ratio information, and/or color information about the object obj from light that has passed through the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13).

According to an embodiment, the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) included in the lens assembly 100 may include a synthetic resin lens, and through the combination of these lenses, the lens assembly 100 may have a field of view (e.g., wide angle) of approximately 110 degrees or more. For example, the lens assembly 100 may have a field of view of approximately 110 degrees to approximately 130 degrees. In addition, the image sensor IS may be formed to enable the arrangement of tens of millions to hundreds of millions of pixels, with an image height ImagH of approximately 3.0mm or more. For example, an image sensor with an image height of approximately 3.0mm to less than approximately 4.0mm may be applied as the image sensor IS of the disclosure. Herein, 'image height' may refer to half of the diagonal length of the image sensor IS which is a thin, approximately rectangular (e.g., square) image sensor with the optical axis O-I as its normal. Further, for example, the image sensor IS may be an image sensor with approximately 50 million pixels or more.

According to an embodiment, the lens assembly 100 may have the optical axis O-I from an object side O to an image side I. FIG. 1 illustrates a directional component X (or X axis), a directional component Y (or Y axis), and a directional component Z (or Z axis). The directional component X (or X axis), the directional component Y (or Y axis), and the directional component Z (or Z axis) in FIG. 1 may mean coordinate axes that are orthogonal to each other. In the following description, the optical axis O-I may be substantially parallel to the directional component Z. In the following embodiments, the optical whole length of the lens assembly 100 (the distance from the vertex of an object-side surface of the first lens from the object side to the image sensor) may be parallel to the directional component Z, and an image plane img of the image sensor IS may be parallel to a virtual plane formed by the directional component X and the directional component Y. In the following description of the configuration of each lens, for example, the object side O may indicate a direction in which the object obj is located, and the image side I may indicate a direction in which the image plane img with an image formed thereon is located. Further, a "surface facing the object side" of a lens may mean, for example, the left surface or front surface of the lens in the drawings of the disclosure, which is on the side where the object obj is located with respect to the optical axis O-I, and a "surface facing the image side" may mean the right surface or rear surface of the lens in the drawings of the disclosure, which is on the side where the image plane img is located with respect to the optical axis O-I. Herein, the image plane img may be, for example, a part on which an imaging element or the image sensor IS is disposed to form an image.

According to an embodiment, based on at least one of the plurality of lenses included in the lens assembly 100, looking towards the object side O along the optical axis O-I may be defined as facing a first direction, and looking towards the image side I along the optical axis O-I may be defined as facing a second direction. When a certain lens (e.g., a first lens L1) includes a surface facing the object side O, the surface facing the object side O may be said to face the first direction. When a certain lens (e.g., the first lens L1) includes a surface facing the image side I, the surface facing the image side I may be said to face the second direction. The first direction and the second direction may be parallel to the directional component Z in FIG. 1.

Referring to FIG. 1, the lens assembly 100 according to an embodiment may include a plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) sequentially arranged in a direction of the optical axis O-I (e.g., a direction from the object side O to the image side I in FIG. 1), including a first lens L1, a second lens L2, a third lens L3, a fourth lens L4, and a fifth lens L5. The plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) may be arranged in alignment with the image sensor IS along the optical axis O-I. According to an embodiment, among the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) sequentially arranged along the direction of the optical axis O-I (e.g., the direction from the object side O to the image side I in FIG. 1), the fifth lens L5, which is located farthest (e.g., located fifth) from the object side, may also be referred to as a lens located closest to (e.g., located first from) the image side I.

According to an embodiment, the lens assembly 100 may include an aperture stop sto that determines the F-number Fno of the entire optical system. The amount of light reaching the image plane img of the image sensor IS may be adjusted by adjusting the size of the aperture stop sto. According to an embodiment, the outer diameter of a lens may be minimized by disposing the aperture stop sto between the first lens L1 and the second lens L2. According to an embodiment of the disclosure, the lens assembly 100 with a small head may be implemented, while also configuring a compact optical system capable of responding to the high-pixel image sensor I, by disposing the aperture stop sto that determines the F-number Fno of the entire optical system between the first lens L1 and the second lens L2, and adjusting the specifications of the second lens L2, the third lens L3, the fourth lens L4, and the fifth lens L5 based on the design of the position of the aperture stop sto and the effective aperture of the first lens L1.

According to an embodiment, a surface of the first lens L1 facing the object side O may be denoted by 'S1' or 'L1S1', and a surface of the first lens L1 facing the image side I may be denoted by 'S2' or 'L1S2'. A position where the aperture stop sto is located may be denoted by 'S3'. A surface of the second lens L2 facing the object side O may be denoted by 'S4' or 'L2S1', and a surface of the second lens L2 facing the image side I may be denoted by 'S5' or 'L2S2'. A surface of the third lens L3 facing the object side O may be denoted by 'S7' or 'L3S1', and a surface of the third lens L3 facing the image side I may be denoted by 'S8' or 'L3S2'. A surface of the fourth lens L4 facing the object side O may be denoted by 'S9' or 'L4S1', and a surface of the fourth lens L4 facing the image side I may be denoted by 'S10' or 'L4S2'. A surface of the fifth lens L5 facing the object side O may be denoted by 'S11' or 'L5S1', and a surface of the fifth lens L5 facing the image side I may be denoted by 'S12' or 'L5S2'.

According to an embodiment, the optical device or electronic device of the disclosure may include a film mask disposed between lenses and/or a spacer for supporting at least a portion of a lens and reducing and/or preventing flare, as an auxiliary element combined with the lens assembly 100. For example, a spacer may be disposed between the second lens L2 and the third lens L3. According to the embodiment of FIG. 1, although it is assumed that a spacer is disposed between the second lens L2 and the third lens L3, the spacer is not shown. Accordingly, reference numeral 'S6' for the spacer may be omitted in the drawing.

According to an embodiment, in describing the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13), a portion closer to the optical axis O-I in each lens may be referred to as a 'chief portion', and a part farther from the optical axis O-I or closer to an edge of the lens may be referred to as a 'marginal portion'. The chief portion may be, for example, a portion of the first lens L1, which intersects the optical axis O-I. The marginal portion may be, for example, a portion of the first lens L1 spaced apart from the optical axis by a predetermined distance. The marginal portion may include, for example, an end portion of the lens farthest from the optical axis O-I.

According to an embodiment, the first lens L1 included in the lens assembly 100 may have a negative refractive power, and the second lens L2 may have a positive refractive power. According to another embodiment, among the plurality of lenses included in the lens assembly 100, the lens (e.g., the fifth lens L5 in the embodiments of FIGS. 1 and 5, and the sixth lens L6 in the embodiments of FIGS. 9 and 13) closest to the image side I may have a negative refractive power. In the above-described embodiments, when light parallel to the optical axis O-I is incident on a lens having a positive refractive power, the light passing through the lens may be focused. For example, the lens having the positive refractive power may be a lens based on the principle of a convex lens. Conversely, when parallel light is incident on a lens having a negative refractive power, the light passing through the lens may be dispersed. For example, the lens having the negative refractive power may be a lens based on the principle of a concave lens.

According to an embodiment, the second lens L2 from the object side O may have the object-side surface S4 that is convex towards the object side O, and the image-side surface S5 that is convex towards the image side I. According to an embodiment, the image-side surface S8 of the third lens L3 from the object side O may have a concave shape towards the image side I. Further, the first lens from the image side I (e.g., the fifth lens L5 in the embodiments of FIGS. 1 and 5, or the sixth lens L6 in the embodiments of FIGS. 9 and 13) may have an object-side surface (e.g., S11 in the embodiments of FIGS. 1 and 5, or S13 in the embodiments of FIGS. 9 and 13) that is convex towards the object side O, and an image-side surface (e.g., S12 in the embodiments of FIGS. 1 and 5, or S14 in the embodiments of FIGS. 9 and 13) that is concave towards the image side I.

According to an embodiment, the head portion of the lens assembly 100 may be formed to have a small outer diameter by configuring the first lens L1 as a lens with a negative refractive power and the second lens L2 as a lens with a positive refractive power, while designing the first lens L1 to have a small effective aperture relative to the image height. Forming the head portion to have a small outer diameter may mean implementing a small head or realizing a bezel-less electronic device. Herein, 'effective aperture' may refer to an actual area through which light passes on one surface of a lens, excluding a flange or rib. The length of the effective aperture may mean the distance between one end and the other end of the lens in a direction perpendicular to the optical axis O-I. Since the lens should be installed within a limited space in the optical device and/or the electronic device, the overall length of the optical system may be reduced by implementing the first lens L1 as a small-aperture lens and configuring the first lens L1 as a lens with a negative refractive power and the second lens L2 as a lens with a positive refractive power,.

According to an embodiment, the radius of curvature, thickness, total track length (TTL) from the image plane (or overall length (OAL)), focal length, and so on of a lens in the disclosure may all be in mm unless otherwise specified. Further, the thickness of a lens, a spacing between lenses, and the TTL may be distances measured from the center of the lens. Herein, the center of the lens may refer to a portion where the optical axis passes, that is, an optical axis portion. Further, in the description of the shape of a lens, one surface having a convex shape means that the optical axis portion of the surface is convex, and one surface having a concave shape means that the optical axis portion of the surface is concave. Even if one surface of a lens (the optical axis portion of the surface) is described as having a convex shape, an edge portion of the lens (a portion spaced apart from the optical axis portion of the surface by a predetermined distance) may be concave. Similarly, even if one surface of a lens (the optical axis portion of the surface) is described as having a concave shape, the edge portion of the lens (the portion spaced apart from the optical axis portion of the surface by a predetermined distance) may be convex. In the following detailed description and claims, an inflection point may mean a point where the radius of curvature changes in a portion that does not intersect the optical axis. The inflection point may be located at a point where one surface of the lens changes from a convex shape to a concave shape or from a concave shape to a convex shape.

Referring to FIG. 1, according to an embodiment, the fifth lens L5 has a negative refractive power, the surface of the fifth lens L5 facing the object side S11 is convex towards the object side, and the surface of the fifth lens L5 facing the image side S12 is concave towards the image side. Further, the fifth lens L5 may have at least one inflection shape. For example, the fifth lens L5 may have two inflection shapes in which the marginal portion of the object-side surface S11 is concave towards the object side, and the image-side surface S12 is convex towards the image side. As will be described later, according to FIG. 9, when the lens assembly includes six lenses, the sixth lens L6 may have a negative refractive power, the surface S13 of the sixth lens L6 facing the object side may be convex towards the object side, and the surface S14 of the sixth lens L6 facing the image side may be concave towards the image side. Further, the sixth lens L6 may have at least one inflection shape.

As described above, according to an embodiment, as the fifth lens L5 or the sixth lens L6, which is a lens closest to the image side, is formed to have a chief portion convex towards the object side O and concave towards the image side I, and a marginal portion having an inflection shape with a different curvature direction from the chief portion, it is advantageous for marginal curvature correction and may prevent the angle of light rays incident on the image sensor from becoming large. According to the disclosure, it is also advantageous for marginal aberration control, thus ensuring high performance even when applying a high-pixel image sensor.

According to an embodiment, at least one surface of at least one lens among the plurality of lenses included in the lens assembly 100 may be formed to be aspheric. For example, the occurrence of spherical aberration may be prevented by implementing all lenses (e.g., the first lens L1, the second lens L2, the third lens L3, the fourth lens L4, and the fifth lens L5 in the embodiments of FIGS. 1 and 5, and the first lens L1, the second lens L2, the third lens L3, the fourth lens L4, the fifth lens L5, and the sixth lens L6 in the embodiments of FIGS. 9 and 13) included in the lens assembly 100 to be aspheric.

According to an embodiment, all of the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) included in the lens assembly 100 may be formed of a synthetic resin material (e.g., plastic material). As all the lenses included in the lens assembly 100 are configured as synthetic resin lenses, the design freedom in terms of size and shape may be increased, thereby facilitating miniaturization and weight reduction. For example, regarding a refractive index at a specific wavelength (e.g., 587.5618nm) of visible light, for example, in the embodiments of FIGS. 1 and 5, while the first lens L1 and the second lens L2 are formed as synthetic resin lenses with a refractive index of 1.55 or less, and the third lens L3 is formed as a synthetic resin lens with a refractive index of 1.66 or more, the fourth lens L4 and the fifth lens L5 may be formed to have refractive indexes less than 1.66, which is smaller than the refractive index of the third lens L3. In the embodiment of FIG. 9, the first lens L1 and the second lens L2 may be formed as synthetic resin lenses with refractive indexes of 1.55 or less, the third lens L3 may be formed as a synthetic resin lens with a refractive index of 1.66 or more, and the fourth lens L4, the fifth lens L5, and the sixth lens L6 may be formed to have refractive indexes less than 1.66, which is smaller than the refractive index of the third lens L3. In the embodiment of FIG. 13, while the first lens L1, the second lens L2, and the third lens L3 are formed as synthetic resin lenses with refractive indexes of 1.55 or less, and the fourth lens L4 is formed as a synthetic resin lens with a refractive index of 1.66 or more, the fifth lens L5 and the sixth lens L6 may be formed to have refractive indexes less than 1.66, which is smaller than the refractive index of the fourth lens L4. This refractive index design may enable miniaturization of the lens assembly and/or the electronic device including it. According to an embodiment, when the refractive index of a lens formed of a synthetic resin (e.g., synthetic resin) decreases or increases, the Abbe number thereof may tend to increase or decrease.

According to an embodiment, as the gap between any one lens and an adjacent other lens is narrower in the plurality of lenses (e.g., the five lenses in the embodiments of FIGS. 1 and 5, and the six lenses in the embodiments of FIGS. 9 and 13) forming the lens assembly 100, the whole length of the lens assembly 100 (the total length of the lens assembly in the optical axis direction) may be shorter. For example, when the optical device and/or the electronic device including the lens assembly 100 according to an embodiment of the disclosure is to be made small, it is advantageous to keep the whole length of the lens assembly 100 as short as possible. However, shortening the total length of the lens assembly 100 while ensuring an appropriate telephoto ratio may have physical limitations. According to an embodiment of the disclosure, the gap between the plurality of lenses (e.g., the five lenses L1, L2, L3, L4, and L5 in the embodiments of FIGS. 1 and 5, and the six lenses L1, L2, L3, L4, L5, and L6 in the embodiments of FIGS. 9 and 13) may be designed in various ways according to optical characteristics (e.g., aberration characteristics, wide-angle characteristics, and/or brightness characteristics) required for the lens assembly 100.

According to an embodiment, the lens assembly 100 may further include a filter F disposed between the fifth lens L5 or the sixth lens L6 and the image sensor IS. The filter F may block light detected by the film or image sensor of the optical device, such as infrared rays. The filter F may include, for example, at least one of a low-pass filter or a cover glass. For example, when the filter F is mounted, the color of an image detected and captured through the image sensor IS may be made to approximate a color that a person perceives, when viewing an actual object. Additionally, the filter F may transmit visible light and emit infrared rays to the outside, thereby preventing the infrared rays from being transmitted to the image plane img of the image sensor. In FIG. 1 and FIG. 5 below, a surface of the filter F facing the object side O may be denoted by 'S13', and a surface of the filter F facing the image side I may be denoted by 'S14'. Further, in FIGS. 9 and 13 below, the surface of the filter F facing the object side O may be denoted by 'S15', and the surface of the filter F facing the image side I may be denoted by 'S16'.

Referring to FIG. 1, the lens assembly 100 and the electronic device including the same according to an embodiment may include five lenses, wherein the first lens L1, the second lens L2, and the fifth lens L5 have a negative refractive power, a positive refractive power, and a negative refractive power, respectively and an aperture stop is disposed between the first lens L1 and the second lens L2, satisfying the following [Formula 1] and [Formula 2].

$$[\text{Formula 1}]$$

$$0.3 < \text{L1 ape} / \text{ImagH} < 0.45$$

$$[\text{Formula 2}]$$

$$\text{TTL}/ \text{ImagH}*2 < 0.9$$

In [Formula 1], L1 ape may be a half effective diameter of the first lens L1, and ImagH may be an effective image height of the image sensor, and in [Formula 2], TTL may be the distance from the object-side surface of the first lens L1 to the image sensor. [Formula 1] is a formula indicating the size of the effective aperture of the first lens L1 relative to the image height, and [Formula 2] may be a formula indicating a slim factor of the electronic device. For example, in designing a wide-angle lens (e.g., a lens with a wide angle of 110 degrees or more, especially 120 degrees or more), there may be a problem of degradation of a final image quality due to flare in spite of good optical performance of the lens system. This is mainly caused by light incident on the sensor due to total internal reflection by the flange (or rib) of the lens. Although the effective aperture of the first lens L1 may reduce the flare, when the value of Formula 1 is less than 0.3, the relative illumination (RI) of light at the periphery of an image formed on the image sensor may be insufficient, causing and/or increasing the phenomenon of vignetting where the periphery of the image appears dark. When the value of Formula 1 exceeds 0.45, the flare increases, which may increase the size of a camera hole and hence impair aesthetic appeal in an electronic device equipped with two or more camera holes. Further, for example, the slim factor tends to decrease in line with the miniaturization/thinning of electronic devices, and when the value (e.g., slim factor) of Formula 2 exceeds 0.9, it becomes difficult to mount it in a miniaturized/thinned electronic device.

The lens assembly 100 and the electronic device including the same may satisfy the following [Formula 3] and [Formula 4].

$$[\text{Formula 3}]$$

$$2.0 < \text{f/EPD} < 2.4$$

$$[\text{Formula 4}]$$

$$\text{FOV} > 110$$

In [Formula 3], entrance pupil diameter (EPD) may be the entrance pupil of the lens assembly, and f may be the composite focal length of the lens assembly, and in [Formula 4], field of view (FOV) may be the field of view of the entire optical system. [Formula 3] is a formula that determines an F-number Fno, which is a value obtained by dividing the composite focal length of all lenses included in the lens assembly by the size of the entrance pupil, and [Formula 4] may be a formula that determines the field of view of a lens.

Referring to [Formula 1], [Formula 2], [Formula 3], and [Formula 4] together, the lens assembly 100 with a small head and the electronic device including the same may be provided by disposing an aperture stop between the first lens L1 and the second lens L2 and maintaining the effective aperture size relative to the image height within a range of [Formula 1] according to an embodiment of the disclosure. The miniaturized lens assembly 100 and the electronic device including the same may be provided by satisfying [Formula 2. Although reduction of the TTL in [Formula 2] may bring the effect of decreasing the overall thickness of the electronic device, when the TTL is excessively reduced, it may be difficult to secure required optical performance. In addition, according to an embodiment of the disclosure, a small head and miniaturization of the electronic device may be realized by satisfying [Formula 1] and [Formula 2], and a wide field of view (a wide-angle lens) may be implemented while realizing a bright lens by satisfying [Formula 3] and [Formula 4].

Further, the lens assembly 100 and the electronic device including the same may satisfy the following [Formula 5].

$$[\text{Formula 5}]$$

$$0.1 < TSt / TA < 0.26$$

In [Formula 5], TST may be the distance from the object-side surface S1 of the first lens L1 to the aperture stop sto, and TA may be the distance from the object-side surface S1 of the first lens L1 to the image-side surface S12 of the fifth lens L5. [Formula 5] indicates the position of the aperture stop within the lens assembly and may also affect the size of the field of view. For example, as TSt is smaller (the aperture stop is located closer to the first lens L1), the field of view may be reduced. According to an embodiment, the lens assembly 100 and the electronic device including the same according to the disclosure may enable a small head and miniaturization of the electronic device by satisfying [Formula 5] within a specified F-number Fno and a specified field of view range. When the value of [Formula 5] is above an upper limit or below a lower limit, the effective aperture size of the first lens L1 may increase, or the thickness of the electronic device may increase.

In addition, the lens assembly 100 may satisfy the following [Formula 6], [Formula 7], and [Formula 8].

$$[\text{Formula 6}]$$

$$N5 > 1.5$$

$$[\text{Formula 7}]$$

$$V1 < 57$$

$$[\text{Formula 8}]$$

$$V2 + V5 < 95$$

In [Formula 6], N5 may represent the refractive index of the fifth lens L5. In [Formula 7], V1 may represent the Abbe number of the first lens L1. In [Formula 8], V2 may be the Abbe number of the second lens L2, and V5 may be the Abbe number of the fifth lens L5. The refractive index in [Formula 6] may be a refractive index when light with a wavelength d-line of approximately 587.5618nm is incident on the lens assembly 100. When the refractive index of the fifth lens L5 is smaller than the above value, modulation transfer function (MTF) performance may deteriorate and field curvature may occur significantly, leading to a decrease in resolving power. Regarding [Formula 7], when the Abbe number is larger than the above value, the lens design cost may increase, and it may be disadvantageous to reduce the distance between the first lens L1 and the second lens L2, which may lead to an increase in the effective aperture size or the thickness of the electronic device. Regarding [Formula 8], when the sum of the Abbe numbers of the second lens L2 and the fifth lens L5 increases, chromatic aberration may increase, thereby decreasing the resolving power.

Further, the lens assembly 100 may satisfy the following [Formula 9] and [Formula 10].

[Formula 9]

$$N3 > 1.6$$

[Formula 10]

$$V3 + V4 < 80$$

In [Formula 9], N3 may be the refractive index of the third lens L3. In [Formula 10], V3 may represent the Abbe number of the third lens L3, and V4 may represent the Abbe number of the fourth lens L4. Regarding [Formula 9], when the refractive index of the third lens L3 is made smaller, chromatic aberration may increases, and regarding [Formula 10], when the sum of the Abbe numbers of the third lens L3 and the fourth lens L4 is greater than the above value, the chromatic aberration may also increase.

The following [Table 1] describes various lens data of the lens assembly 100, in which 'S1~S2, S4~S5, and S7~S14' may refer to the surfaces of a plurality of related lenses (e.g., L1, L2, L3, L4, and L5) and/or the filter F. Additionally, radius may mean the radius of curvature of a lens, Thickness may mean the thickness of the lens or an air gap, H-Ape may mean the effective diameter of the lens, effective focal length (EFL) may mean the effective focal length of the lens, Nd may mean the refractive index of a medium (e.g., the lens), and Vd may mean the Abbe number of the lens. The lens assembly 100 included in the following [Table 1] may satisfy the above-described conditions *and/or at least one of the above-described conditions), when the F-number Fno is approximately 2.294, the field of view ANG is approximately 119.45 degrees, the focal length is approximately 2.346mm, and the image height ImagH of the image sensor IS is approximately 3.269.

[Table 1]

| surface | radius | Thickness | H-Ape | EFL | Nd | Vd |
|---|---|---|---|---|---|---|
| S1 | 300.00000 | 0.55000 | 1.42000 | -4.695 | 1.54401 | 55.91 |
| S2 | 2.54154 | 0.54467 | 0.82193 | | | |
| S3(Stop) | infinity | 0.07189 | 0.57500 | | | |
| S4 | 3.68894 | 0.85773 | 0.65539 | 2.546 | 1.54401 | 55.91 |
| S5 | -2.04895 | -0.14091 | 0.84300 | | | |
| S6 | infinity | 0.34458 | 0.88475 | | | |
| S7 | 4.62237 | 0.28000 | 0.98500 | -11.425 | 1.67074 | 19.23 |
| S8 | 2.82541 | 0.20074 | 1.20057 | | | |
| S9 | -12.70737 | 1.08454 | 1.39996 | 2.508 | 1.53500 | 55.75 |
| S10 | -1.25489 | 0.39586 | 1.58969 | | | |
| S11 | 1.75909 | 0.50000 | 1.94000 | -3.265 | 1.61444 | 25.94 |
| S12 | 0.83879 | 0.37472 | 2.64023 | | | |
| S13 | infinity | 0.11000 | 2.92237 | infinity | 1.51680 | 64.2 |
| S14 | infinity | 0.63500 | 2.96212 | | | |
| img | infinity | 0.025 | 3.36900 | | | |

According to an embodiment, the lens assembly 100 may be configured with five lenses having negative, positive, negative, positive, and negative refractive powers in order from the object side, and one filter F (e.g., an IR filter). Since the F-number Fno is 2.2, the field of view is approximately 110 degrees or more, and performance may be secured for up to an image height of approximately 3.0mm to approximately 4.0mm, an optical system enabling application of a high-pixel sensor may be provided. In the embodiment illustrated in FIG. 1, the effective diameter of the first lens L1 relative to the image height (related to Formula 1) may be set to approximately 0.43, the slim factor (related to Formula 2) may be set to approximately 0.89, and a value for the position of the aperture stop within the lens assembly (related to Formula 5) may be set to approximately 0.23. Therefore, the embodiment illustrated in FIG. 1, which provides a wide-angle (or ultra-wide-angle) optical system with good various aberrations, may provide a lens assembly with a small head and a compact size, to which a high-pixel sensor is applied, and an electronic device including the same. In addition to [Table 1], lens assemblies according to embodiments described in the following [Table 4], [Table 7], and [Table 10] may be applied in this disclosure. The following [Table 2] and [Table 3] describe the aspheric coefficients of the plurality of lenses (e.g., the five lenses L1, L2, L3, L4, and L5 in the embodiments of FIGS. 1 and 5, and hereinafter, the six lenses L1, L2, L3, L4, L5, and L6 in the embodiments of FIGS. 9 and 13). The aspheric coefficients may be calculated by the following [Equation 1].

[Equation 1]

$$x = \frac{(y^2/R)}{1+\sqrt{1-(1+k)(y/R)^2}} + Ay^4 + By^6 + Cy^8 + Dy^{10} + Ey^{12} + Fy^{14} + Gy^{16} + Hy^{18} + Iy^{20} + Jy^{22} + Ky^{24} + Ly^{26} + My^{28} + Ny^{30}$$

Herein, 'x' may represent the distance (sag) from the vertex of a lens in the direction of the optical axis O-I, 'R' may represent the radius of curvature at the vertex of the lens, 'y' may represent the distance in a direction perpendicular to the optical axis, 'k' may represent a conic constant, and 'A, B, C, D, E, F, G, H, I, J, K, L, M, and N' may represent aspheric coefficients, respectively.

[Table 2]

|  | S1 | S2 | S4 | S5 | S7 |
|---|---|---|---|---|---|
| **Radius** | 3.00000E+02 | 2.54154E+00 | 3.68894E+00 | -2.04895E+00 | 4.62237E+00 |
| **k(Conic)** | 1.00000E+02 | 6.14018E+00 | 0.00000E+00 | 2.76203E+00 | 0.00000E+00 |
| **A(4th)** | 1.36268E-01 | 3.08725E-01 | 5.25492E-03 | -6.92825E-02 | -2.25868E-01 |
| **B(6th)** | -5.12255E-02 | -1.09170E+00 | -1.55408E-01 | -9.50235E-01 | -4.03366E-01 |
| **C(8th)** | -2.64749E-02 | 8.57244E+00 | 3.80593E-01 | 8.76575E+00 | 1.57956E+00 |
| **D(10th)** | 1.13296E-01 | -4.01842E+01 | -6.90477E-01 | -4.28893E+01 | -2.61071E+00 |
| **E(12th)** | -1.52236E-01 | 1.12241E+02 | 0.00000E+00 | 1.28993E+02 | 2.55902E+00 |
| **F(14th)** | 1.19019E-01 | -1.82568E+02 | 0.00000E+00 | -2.42938E+02 | -1.46696E+00 |
| **G(16th)** | -5.61567E-02 | 1.60546E+02 | 0.00000E+00 | 2.78193E+02 | 3.62746E-01 |
| **H(18th)** | 1.47552E-02 | -5.90778E+01 | 0.00000E+00 | -1.77050E+02 | 0.00000E+00 |
| **I(20th)** | -1.66216E-03 | 0.00000E+00 | 0.00000E+00 | 4.79724E+01 | 0.00000E+00 |
| **J(22th)** | 0.00000E+00 | 0.00000E+00 | 0.00000E+00 | 0.00000E+00 | 0.00000E+00 |
| **K(24th)** | 0.00000E+00 | 0.00000E+00 | 0.00000E+00 | 0.00000E+00 | 0.00000E+00 |
| **L(26th)** | 0.00000E+00 | 0.00000E+00 | 0.00000E+00 | 0.00000E+00 | 0.00000E+00 |
| **M(28th)** | 0.00000E+00 | 0.00000E+00 | 0.00000E+00 | 0.00000E+00 | 0.00000E+00 |
| **N(30th)** | 0.00000E+00 | 0.00000E+00 | 0.00000E+00 | 0.00000E+00 | 0.00000E+00 |

[Table 3]

|  | S8 | S9 | S10 | S11 | S12 |
|---|---|---|---|---|---|
| **Radius** | 2.82541E+00 | -1.27074E+01 | -1.25489E+00 | 1.75909E+00 | 8.38792E-01 |
| **k(Conic)** | 4.73823E-01 | 3.75978E+01 | -1.37189E+00 | -1.07096E+01 | -3.86069E+00 |
| **A(4th)/** | 4.95018E-03 | 2.16005E-01 | 7.32133E-03 | -1.93690E-01 | -8.54918E-02 |
| **B(6th)** | -7.07252E-01 | -3.83873E-01 | 1.07724E-01 | 3.02579E-01 | -3.75652E-02 |
| **C(8th)** | 1.71827E+00 | 3.60058E-01 | -2.85374E-01 | -1.00681E+00 | 1.34061E-01 |
| **D(10th)** | -2.37043E+00 | -1.68237E-01 | 3.96474E-01 | 2.27791E+00 | -1.61670E-01 |
| **E(12th)** | 2.14100E+00 | -1.72945E-02 | -3.42901E-01 | -3.46775E+00 | 1.23028E-01 |
| **F(14th)** | -1.23052E+00 | 9.66847E-02 | 1.87189E-01 | 3.69014E+00 | -6.51456E-02 |
| **G(16th)** | 4.01271E-01 | -7.29776E-02 | -6.14578E-02 | -2.81271E+00 | 2.47863E-02 |

(continued)

|  | S8 | S9 | S10 | S11 | S12 |
|---|---|---|---|---|---|
| H(18th) | -5.57723E-02 | 2.49081E-02 | 1.10548E-02 | 1.55293E+00 | -6.85334E-03 |
| I(20th) | 0.00000E+00 | -3.31025E-03 | -8.44987E-04 | -6.20957E-01 | 1.37589E-03 |
| J(22th) | 0.00000E+00 | 0.00000E+00 | 0.00000E+00 | 1.77726E-01 | -1.98060E-04 |
| K(24th) | 0.00000E+00 | 0.00000E+00 | 0.00000E+00 | -3.54351E-02 | 1.98766E-05 |
| L(26th) | 0.00000E+00 | 0.00000E+00 | 0.00000E+00 | 4.66831E-03 | -1.31751E-06 |
| M(28th) | 0.00000E+00 | 0.00000E+00 | 0.00000E+00 | -3.64910E-04 | 5.17227E-08 |
| N(30th) | 0.00000E+00 | 0.00000E+00 | 0.00000E+00 | 1.28069E-05 | -9.08560E-10 |

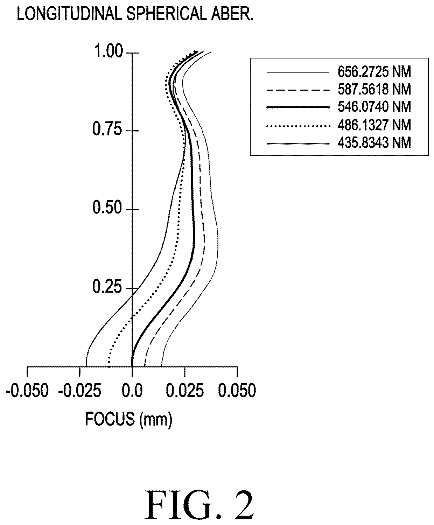

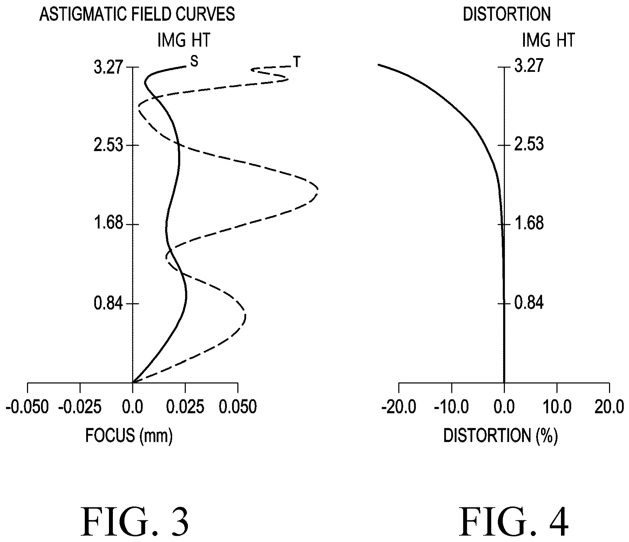

FIG. 2 is a graph illustrating spherical aberration of the lens assembly 100 according to the embodiment of FIG. 1. Spherical aberration may be a phenomenon where light passing through different parts (e.g., a chief portion and a marginal portion) of a lens is focused at different positions. In FIG. 2, the horizontal axis represents the degree of longitudinal spherical aberration, and the vertical axis represents the normalized distance from the center of the optical axis. The graph may illustrate a change in longitudinal spherical aberration according to the wavelength of light. Longitudinal spherical aberrations may be illustrated, for example, for light with a wavelength of approximately 656.2725 nanometers (nm), light with a wavelength of approximately 587.5618nm, light with a wavelength of approximately 546.0740nm, light with a wavelength of approximately 486.1327 nm, or light with a wavelength of approximately 435.8343nm, respectively. As may be seen from FIG. 2, the longitudinal spherical aberration of the lens assembly according to an embodiment of the disclosure in the visible light range is limited to within +0.050 to -0.050, exhibiting stable optical characteristics. FIG. 3 is a graph illustrating astigmatism of the lens assembly 100 according to the embodiment of FIG. 1. Astigmatism may refer to misalignment between the focal points of light passing through in the vertical and horizontal directions, when the tangential plane (or meridional plane) and sagittal plane of a lens have different radiuses.

In FIG. 3, the astigmatism of the lens assembly 100 is a result obtained at a wavelength of approximately 546.0740nm. A dotted line represents the astigmatism (e.g., meridional plane curvature) in a tangential direction T, and a solid line represents the astigmatism (e.g., sagittal plane curvature) in a sagittal direction S. As may be seen from FIG. 3, the astigmatism according to an embodiment of the disclosure is generally limited to within +0.050 to -0.050 in the sagittal direction, exhibiting stable optical characteristics. Although the astigmatism in the tangential direction shows a relatively larger deviation compared to the astigmatism in the sagittal direction, it may be formed within a deviation that is acceptable to the user. In the disclosure, as the aspheric coefficient of each lens (five or six lenses) is applied up to a high order to respond to a high-pixel sensor, the astigmatism graph (e.g., tangential astigmatism graph) may be identified as changing sharply several times from the center to the edge of the image height ImagH.

FIG. 4 is a graph illustrating distortion of the lens assembly 100 according to the embodiment of FIG. 1. Distortion occurs because an optical magnification changes with the distance from the optical axis O-I, which may result in an image formed on an actual image plane (e.g., the image plane img in FIG. 1) appearing larger or smaller than an image on a theoretical image plane.

In FIG. 4, the distortion of the lens assembly 100 is a result obtained at a wavelength of approximately 546.0740nm. An image captured through the lens assembly 100 may have some distortion at a point away from the optical axis O-I. However, this level of distortion is generally observed in an optical device using a lens, and the distortion is less than approximately 10%, which may provide good optical characteristics.

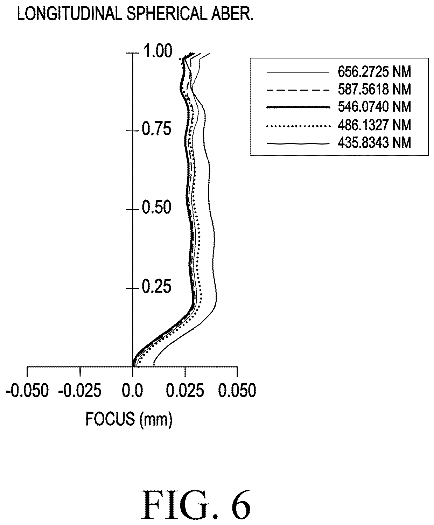

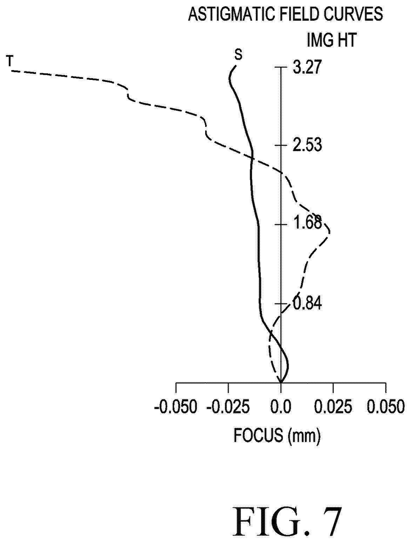

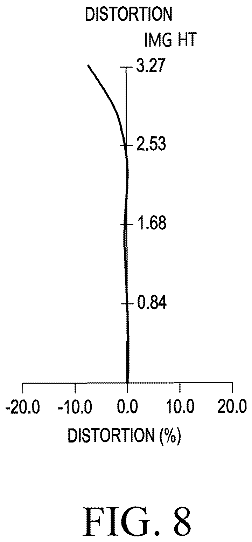

FIG. 5 is a configuration diagram illustrating the lens assembly 200 according to an embodiment. FIG. 6 is a graph illustrating spherical aberration of the lens assembly 200 according to the embodiment of FIG. 5. FIG. 7 is a graph illustrating astigmatism of the lens assembly 200 according to the embodiment of FIG. 5. FIG. 8 is a graph illustrating distortion of the lens assembly 200 according to the embodiment of FIG. 5.

The description of the lens assembly 100 according to the above-described embodiments may be applied to the lens assemblies 200, 300, and 400 according to other embodiments described below. Some of the plurality of lens assemblies 100, 200, 300, and 400 may have the same lens attributes (e.g., field of view, focal length, autofocus, F-number Fno, or optical zoom), or at least one lens assembly may have one or more lens attributes different from those of other lens assemblies.

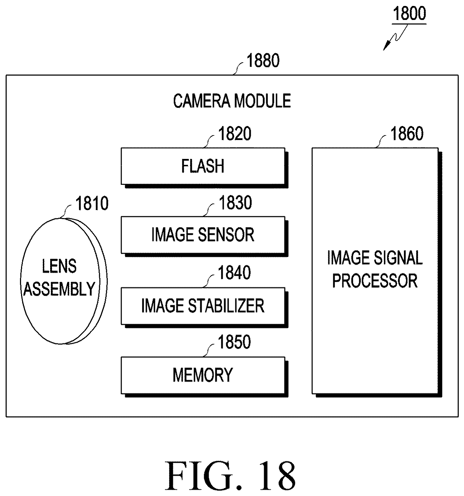

Each of the plurality of lens assemblies 100, 200, 300, and 400 may form an optical device (e.g., camera module) by including a flash (a flash 1820 in FIG. 18 described later), the image sensor IS, an image stabilizer (an image stabilizer 1840 in FIG. 18 described later), memory (memory 1850 in FIG. 18 described later), or an image signal processor (an image signal processor 1860 in FIG. 18 described later).

In the following description of embodiments of the disclosure, similar reference numerals may be assigned or omitted in the drawings for components that may be easily understood through the foregoing embodiments. Further, a detailed description thereof may also be omitted, when it is redundant.

Referring to FIGS. 5 to 8 together, the lens assembly 200 according to another embodiment of the disclosure, which is different from the embodiment of FIG. 1, may include a plurality of lenses (e.g., L1, L2, L3, L4, and L5), the image sensor IS, and/or the filter F.

[Table 4] below may illustrate various lens data of the lens assembly 200 according to the embodiment of FIG. 5. [Table 5] and [Table 6] below may respectively describe the aspheric coefficients of the plurality of lenses L1, L2, L3, L4, and L5. The lens assembly 200 may satisfy the above-described conditions (and/or at least one of the above-described conditions) when the F-number Fno is approximately 2.288, the field of view ANG is approximately 111.22 degrees, the focal length is approximately 2.36mm, and the image height ImagH of the image sensor IS is approximately 3.269.

[Table 4]

| surface | radius | Thickness | H-Ape | EFL | Nd | Vd |
|---|---|---|---|---|---|---|
| S1 | -10.81025 | 0.30842 | 1.37213 | -6.347 | 1.54410 | 56.09 |
| S2 | 5.15836 | 0.77176 | 0.98760 | | | |
| S3(Stop) | infinity | 0.02156 | 0.59048 | | | |
| S4 | 4.36339 | 0.87958 | 0.61914 | 2.040 | 1.54410 | 56.09 |
| S5 | -1.39124 | 0.03304 | 0.82000 | | | |
| S7 | 3.08293 | 0.23000 | 0.94390 | -5.120 | 1.66065 | 20.36 |
| S8 | 1.57306 | 0.57937 | 1.06502 | | | |
| S9 | -15.89643 | 1.07451 | 1.45081 | 1.987 | 1.54410 | 56.09 |
| S10 | -1.04085 | 0.11856 | 1.67951 | | | |
| S11 | 1.86261 | 0.43945 | 1.90000 | -2.096 | 1.61440 | 25.92 |
| S12 | 0.69626 | 0.58086 | 2.62046 | | | |
| S13 | infinity | 0.11000 | 3.04123 | Infinity | 1.51680 | 64.2 |
| S14 | infinity | 0.42951 | 3.08228 | | | |
| img | infinity | 0.03000 | 3.36900 | | | |

[Table 5]

| | S1 | S2 | S3 | S4 | S7 |
|---|---|---|---|---|---|
| **Radius** | -1.08102E+01 | 5.15836E+00 | 4.36339E+00 | -1.39124E+00 | 3.08293E+00 |
| **k(Conic)** | 3.65745E+00 | 1.18246E+01 | -1.82103E+01 | 1.09034E+00 | 7.76985E+00 |
| **A(4th)** | 3.50007E-01 | 4.54962E-01 | -3.21342E-01 | 5.76972E-02 | -3.16365E-01 |
| **B(6th)** | -9.72042E-01 | -1.54657E+00 | 1.56239E+01 | -3.08101E-01 | 6.41896E-01 |
| **C(8th)** | 4.62849E+00 | 1.23387E+01 | -4.52430E+02 | 4.67341E+00 | -1.86568E+00 |
| **D(10th)** | -1.69631E+01 | -6.59243E+01 | 8.01787E+03 | -3.19885E+01 | 1.83466E+00 |
| **E(12th)** | 4.39928E+01 | 2.26131E+02 | -9.31853E+04 | 3.62492E+01 | 5.53314E-01 |
| **F(14th)** | -8.18733E+01 | -4.83967E+02 | 7.37069E+05 | 8.84465E+02 | 4.89818E+01 |
| **G(16th)** | 1.11285E+02 | 5.61963E+02 | -4.04753E+06 | -6.87428E+03 | -3.71583E+02 |
| **H(18th)** | -1.11510E+02 | -4.79281E+01 | 1.55131E+07 | 2.62812E+04 | 1.23251E+03 |
| **I(20th)** | 8.23211E+01 | -9.24206E+02 | -4.10991E+07 | -6.16269E+04 | -2.35994E+03 |
| **J(22th)** | -4.42309E+01 | 1.49569E+03 | 7.31176E+07 | 9.24622E+04 | 2.79012E+03 |
| **K(24th)** | 1.68180E+01 | -1.16531E+03 | -8.22704E+07 | -8.68569E+04 | -2.01754E+03 |
| **L(26th)** | -4.28659E+00 | 4.72269E+02 | 5.17248E+07 | 4.66529E+04 | 8.20188E+02 |
| **M(28th)** | 6.56538E-01 | -7.96626E+01 | -1.32514E+07 | -1.09533E+04 | -1.43838E+02 |

(continued)

|  | S1 | S2 | S3 | S4 | S7 |
|---|---|---|---|---|---|
| **N(30th)** | -4.56392E-02 | 0.00000E+00 | 0.00000E+00 | 0.00000E+00 | 0.00000E+00 |

[Table 6]

|  | S8 | S9 | S10 | S11 | S12 |
|---|---|---|---|---|---|
| **Radius** | 1.57306E+00 | -1.58964E+01 | -1.04085E+00 | 1.86261E+00 | 6.96256E-01 |
| **k(Conic)** | -3.49920E-01 | 8.84020E+01 | -1.96214E+00 | -2.96159E+01 | -3.55262E+00 |
| **A(4th)** | -3.53213E-01 | 5.85462E-02 | 7.11004E-02 | -4.11950E-03 | -1.92343E-01 |
| **B(6th)** | 9.86752E-01 | -3.76640E-01 | 9.74245E-02 | -4.70701E-01 | 1.74332E-01 |
| **C(8th)** | -4.65205E+00 | 1.91233E+00 | -7.95034E-01 | 1.18491E+00 | -9.35472E-02 |
| **D(10th)** | 2.17090E+01 | -6.54501E+00 | 1.93183E+00 | -1.91442E+00 | -6.78439E-03 |
| **E(12th)** | -8.23216E+01 | 1.52870E+01 | -2.53503E+00 | 2.27478E+00 | 5.07826E-02 |
| **F(14th)** | 2.37870E+02 | -2.50508E+01 | 1.62879E+00 | -2.13040E+00 | -3.98915E-02 |
| **G(16th)** | -5.10149E+02 | 2.96006E+01 | 2.31115E-01 | 1.60755E+00 | 1.74174E-02 |
| **H(18th)** | 7.96749E+02 | -2.56437E+01 | -1.44602E+00 | -9.54707E-01 | -4.92632E-03 |
| **I (20th)** | -8.86922E+02 | 1.63616E+01 | 1.38890E+00 | 4.28105E-01 | 9.39406E-04 |
| **J(22th)** | 6.81801E+02 | -7.62233E+00 | -7.44302E-01 | -1.39127E-01 | -1.20396E-04 |
| **K(24th)** | -3.42763E+02 | 2.52716E+00 | 2.49989E-01 | 3.14027E-02 | 9.96417E-06 |
| **L(26th)** | 1.01177E+02 | -5.65583E-01 | -5.23719E-02 | -4.63901E-03 | -4.81749E-07 |
| **M(28th)** | -1.32755E+01 | 7.66223E-02 | 6.28094E-03 | 4.01971E-04 | 1.03426E-08 |
| **N(30th)** | 0.00000E+00 | -4.74399E-03 | -3.30124E-04 | -1.54615E-05 | 0.00000E+00 |

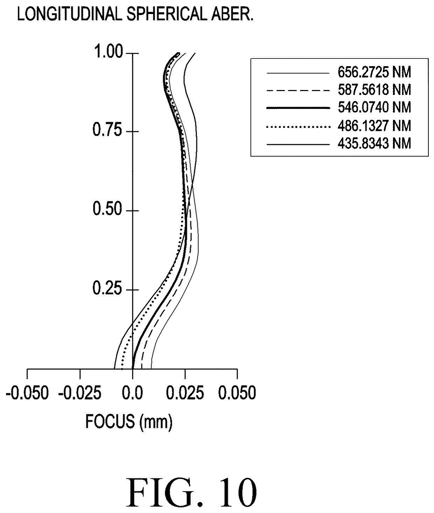

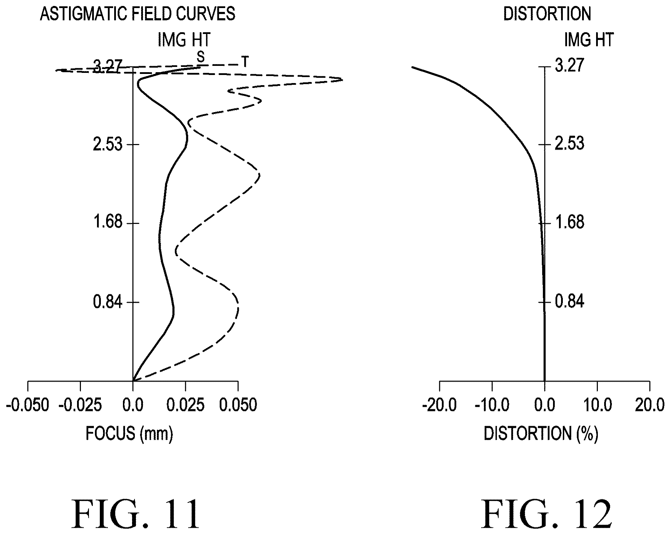

According to an embodiment, the lens assembly 200 may be configured with five lenses having negative, positive, negative, positive, and negative refractive powers in order from the object side, and one filter F (e.g., an IR filter). Since the F-number Fno is approximately 2.288, the field of view is approximately 110 degrees or more, and performance may be secured for up to an image height of approximately 3.0mm to approximately 4.0mm, an optical system enabling application of a high-pixel sensor may be provided. In the embodiment illustrated in FIG. 4, the effective diameter of the first lens L1 relative to the image height (related to Formula 1) may be set to approximately 0.42, the slim factor (related to Formula 2) may be set to approximately 0.88, and a value for the position of the aperture stop within the lens assembly (related to Formula 5) may be set to approximately 0.22. Therefore, the embodiment illustrated in FIG. 4, which provides a wide-angle (or ultra-wide-angle) optical system with good various aberrations, may provide a lens assembly with a small head and a compact size, to which a high-pixel sensor is applied, and an electronic device including the same. FIG. 9 is a configuration diagram illustrating the lens assembly 300 according to an embodiment. FIG. 10 is a graph illustrating spherical aberration of the lens assembly 300 according to the embodiment of FIG. 9. FIG. 11 is a graph illustrating astigmatism of the lens assembly 300 according to the embodiment of FIG. 9. FIG. 12 is a graph illustrating distortion of the lens assembly 300 according to the embodiment of FIG. 9. Referring to FIGS. 9 to 12, the lens assembly 300 according to another embodiment of the disclosure may include a plurality of lenses L1, L2, L3, L4, L5, and L6, the image sensor IS, and/or the filter F. Unlike the foregoing embodiments with five lenses, the lens assembly 300 according to the embodiment of FIGS. 9 to 12 may include six lenses.

In this embodiment, the lens closest to the image side or the last lens from the object side may be the sixth lens L6 instead of the fifth lens L5. Therefore, the TTL value in [Formula 2] and the TA value in [Formula 5] may be large relative to those in the foregoing embodiments. Further, in measuring the TA in [Formula 5], the sixth lens L6 may be a reference instead of the fifth lens L5. According to an embodiment, the sixth lens L6, which is the first lens from the image side, may comprise a surface S13 facing the object side that is convex towards the object side, and a surface S14 facing the image side that is concave towards the image side. According to another embodiment, the sixth lens L6 may be formed to comprise inflection points on both the surface S13 facing the object side and the surface S14 facing the image side.

According to an embodiment, the lens assembly 300 including six lenses may satisfy [Formula 11] and [Formula 12].

[Formula 11]

$$T34 < 0.152$$

[Formula 12]

$$T56 < 0.08$$

T34 in [Formula 11] may represent the distance from the image-side surface S8 of the third lens L3 to the object-side surface S9 of the fourth lens L4, and T56 in [Equation 12] may represent the distance from the image-side surface S12 of the fifth lens L5 to the object-side surface S13 of the sixth lens L6. Both [Formula 11] and [Formula 12] represent an air gap between lenses, and when it exceeds an upper limit, chromatic aberration may significantly deteriorate.

[Table 7] below may illustrate various lens data of the lens assembly 300, and [Table 8] and [Table 9] below may respectively describe the aspheric coefficients of the plurality of lenses L1, L2, L3, L4, L5, and L6. The lens assembly 300 may satisfy the above-described conditions (and/or at least one of the above-described conditions) when the F-number Fno is approximately 2.321, the field of view ANG is approximately 119.66 degrees, the focal length is approximately 2.348mm, and the image height ImagH of the image sensor IS is approximately 3.269.

[Table 7]

| surface | radius | Thickness | H-Ape | EFL | Nd | Vd |
|---|---|---|---|---|---|---|
| S1 | 11.54344 | 0.50000 | 1.32000 | -5.368 | -5.368 | 55.91 |
| S2 | 2.30265 | 0.52768 | 0.81261 | | | |
| S3(Stop) | infinity | 0.05000 | 0.55000 | | | |
| S4 | 4.87592 | 0.82081 | 0.59882 | 2.819 | 2.819 | 55.91 |
| S5 | -2.11723 | -0.14091 | 0.81500 | | | |
| S6 | infinity | 0.35581 | 0.86804 | | | |
| S7 | 3.46818 | 0.27341 | 0.98716 | -30.285 | -30.285 | 19.23 |
| S8 | 2.87299 | 0.15176 | 1.20500 | | | |
| S9 | -9.26154 | 1.16967 | 1.30995 | 1.491 | 1.491 | 55.75 |
| S10 | -0.76966 | 0.02500 | 1.52634 | | | |
| S11 | 10.16435 | 0.34000 | 1.74000 | -3.602 | -3.602 | 21.52 |
| S12 | 1.89497 | 0.08438 | 2.15817 | | | |
| S13 | 5.08167 | 0.44000 | 2.26206 | -2.968 | -2.968 | 55.91 |
| S14 | 1.19159 | 0.36292 | 2.73569 | | | |
| S15 | infinity | 0.11 | 2.93896 | infinity | infinity | 64.2 |
| S16 | infinity | 0.63877 | 2.97667 | | | |
| img | infinity | 0.02123 | 3.37007 | | | |

[Table 8]

| | S1 | S2 | S4 | S5 | S7 | S8 |
|---|---|---|---|---|---|---|
| **Radius** | 1.15434E+01 | 2.30265E+00 | 4.87592E+00 | - 2.11723E+00 | 3.46818E+00 | 2.87299E+00 |
| **k(Conic)** | 3.82405E+01 | 5.07016E+00 | 0.00000E+00 | 3.42364E+00 | 0.00000E+00 | 3.11611E-01 |
| **A(4th)** | 1.44998E-01 | 3.06195E-01 | -2.06099E-02 | -1.36348E-01 | -2.38073E-01 | 4.45357E-02 |
| **B(6th)** | -5.28781E-02 | -8.25407E-01 | -2.84640E-01 | -8.22777E-01 | -4.05890E-01 | -8.02955E-01 |
| **C(8th)** | -3.54655E-02 | 6.56106E+00 | 7.62615E-01 | 7.49474E+00 | 1.62216E+00 | 1.83340E+00 |
| **D(10th)** | 1.85363E-01 | - 3.15950E+01 | - 1.58088E+00 | - 3.52545E+01 | - 2.63081E+00 | - 2.31759E+00 |

(continued)

|  | S1 | S2 | S4 | S5 | S7 | S8 |
|---|---|---|---|---|---|---|
| **E(12th)** | -3.07572E-01 | 9.13045E+01 | 0.00000E+00 | 1.02895E+02 | 2.29439E+00 | 1.82196E+00 |
| **F(14th)** | 2.94157E-01 | - 1.54080E+02 | 0.00000E+00 | - 1.92862E+02 | - 1.05560E+00 | -8.82269E-01 |
| **G(16th)** | -1.66906E-01 | 1.41417E+02 | 0.00000E+00 | 2.24570E+02 | 1.93804E-01 | 2.40586E-01 |
| **H(18th)** | 5.20333E-02 | - 5.49518E+01 | 0.00000E+00 | - 1.47508E+02 | 0.00000E+00 | -2.82642E-02 |
| **I(20th)** | -6.90627E-03 | 0.00000E+00 | 0.00000E+00 | 4.15373E+01 | 0.00000E+00 | 0.00000E+00 |
| **J(22th)** | 0.00000E+00 | 0.00000E+00 | 0.00000E+00 | 0.00000E+00 | 0.00000E+00 | 0.00000E+00 |
| **K(24th)** | 0.00000E+00 | 0.00000E+00 | 0.00000E+00 | 0.00000E+00 | 0.00000E+00 | 0.00000E+00 |
| **L(26th)** | 0.00000E+00 | 0.00000E+00 | 0.00000E+00 | 0.00000E+00 | 0.00000E+00 | 0.00000E+00 |
| **M(28th)** | 0.00000E+00 | 0.00000E+00 | 0.00000E+00 | 0.00000E+00 | 0.00000E+00 | 0.00000E+00 |
| **N(30th)** | 0.00000E+00 | 0.00000E+00 | 0.00000E+00 | 0.00000E+00 | 0.00000E+00 | 0.00000E+00 |

[Table 9]

|  | S9 | S10 | S11 | S12 | S13 | S14 |
|---|---|---|---|---|---|---|
| **Radius** | - 9.26154E+0 0 | -7.69658E-01 | 1.01643E+0 1 | 1.89497E+0 0 | 5.08167E+0 0 | 1.19159E+0 0 |
| **k(Conic)** | 0.00000E+0 0 | - 2.20756E+0 0 | 0.00000E+0 0 | - 2.42410E+0 1 | 2.10883E+0 0 | - 1.48025E+0 0 |
| **A(4th)** | 2.39298E-01 | 1.50456E-01 | -4.15596E-01 | -3.99416E-01 | 1.71528E-01 | -8.46610E-02 |
| **B(6th)** | -3.95543E-01 | -1.67982E-01 | 1.06936E+0 0 | 1.63892E+0 0 | 4.09352E-02 | -1.81152E-01 |
| **C(8th)** | 2.74462E-01 | 7.01424E-02 | -6.29277E-01 | - 3.20591E+0 0 | - 1.18493E+0 0 | 2.85710E-01 |
| **D(10th)** | 1.15884E-01 | -9.17214E-03 | - 3.17625E+0 0 | 3.95588E+0 0 | 2.63447E+0 0 | -2.09916E-01 |
| **E(12th)** | -3.92745E-01 | 0.00000E+0 0 | 1.01199E+0 1 | - 3.44933E+0 0 | - 3.19707E+0 0 | 8.57171E-02 |
| **F(14th)** | 3.53765E-01 | 0.00000E+0 0 | - 1.62085E+0 1 | 2.20718E+0 0 | 2.48025E+0 0 | -1.48668E-02 |
| **G(16th)** | -1.68583E-01 | 0.00000E+0 0 | 1.70928E+0 1 | - 1.05021E+0 0 | - 1.29555E+0 0 | -3.29324E-03 |
| **H(18th)** | 4.29646E-02 | 0.00000E+0 0 | - 1.26817E+0 1 | 3.74005E-01 | 4.65881E-01 | 2.78684E-03 |
| **I(20th)** | -4.62778E-03 | 0.00000E+0 0 | 6.73847E+0 0 | -9.99286E-02 | -1.15843E-01 | -8.43399E-04 |
| **J(22th)** | 0.00000E+0 0 | 0.00000E+0 0 | - 2.55105E+0 0 | 1.99101E-02 | 1.96513E-02 | 1.52500E-04 |
| **K(24th)** | 0.00000E+0 0 | 0.00000E+0 0 | 6.71263E-01 | -2.89099E-03 | -2.18929E-03 | -1.77452E-05 |
| **L(26th)** | 0.00000E+0 0 | 0.00000E+0 0 | -1.16524E-01 | 2.90034E-04 | 1.47545E-04 | 1.30920E-06 |
| **M(28th)** | 0.00000E+0 0 | 0.00000E+0 0 | 1.19822E-02 | -1.79527E-05 | -4.97539E-06 | -5.59966E-08 |
| **N(30th)** | 0.00000E+0 0 | 0.00000E+0 0 | -5.52200E-04 | 5.14305E-07 | 4.36690E-08 | 1.06106E-09 |

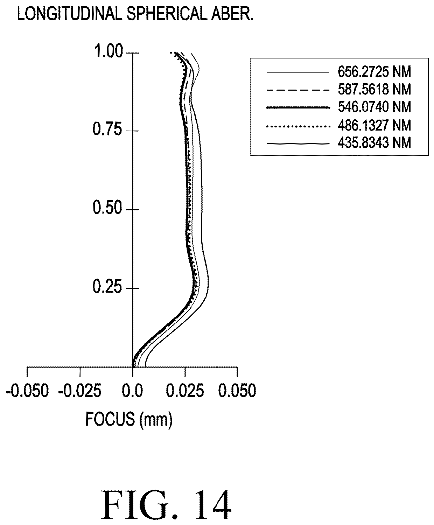

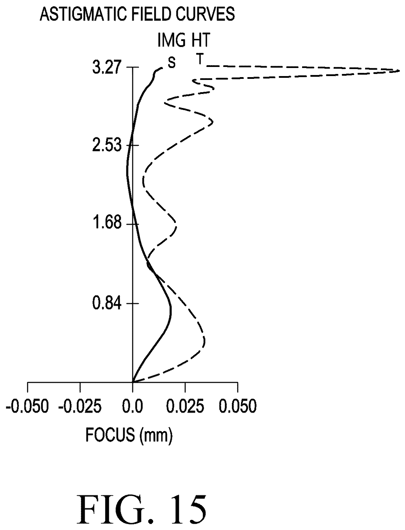

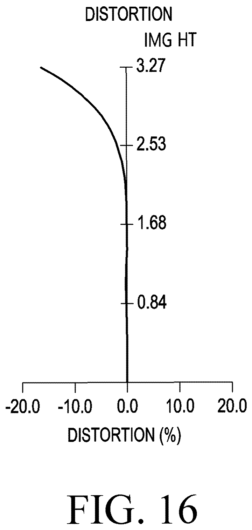

According to an embodiment, the lens assembly 300 may be configured with six lenses having negative, positive, negative, positive, negative, and negative refractive powers in order from the object side, and one filter F (e.g., an IR filter). Since the F-number Fno is approximately 2.321, the field of view is approximately 120, and performance may be secured for up to an image height of approximately 3.0mm to approximately 4.0mm, an optical system enabling application of a high-pixel sensor may be provided. In the embodiment illustrated in FIG. 9, the effective diameter of the first lens L1 relative to the image height (related to Formula 1) may be set to approximately 0.40, the slim factor (related to Formula 2) may be set to approximately 0.86, and a value for the position of the aperture stop within the lens assembly (related to Formula 5) may be set to approximately 0.25. Therefore, the embodiment illustrated in FIG. 9, which provides a wide-angle (or ultra-wide-angle) optical system with good various aberrations, may provide a lens assembly with a small head and a compact size, to which a high-pixel sensor is applied, and an electronic device including the same. FIG. 13 is a configuration diagram illustrating the lens assembly 400 according to an embodiment. FIG. 14 is a graph illustrating spherical aberration of the lens assembly 400 according to the embodiment of FIG. 13. FIG. 15 is a graph illustrating astigmatism of the lens assembly 400 according to the embodiment of FIG. 13. FIG. 16 is a graph illustrating distortion of the lens assembly 400 according to the embodiment of FIG. 13. Referring to FIGS. 13 to 16, the lens assembly 400 according to another embodiment of the disclosure may include a plurality of lenses L1, L2, L3, L4, L5, and L6, the image sensor IS, and/or the filter F.

[Table 10] below may illustrate various lens data of the lens assembly 400, and [Table 11] and [Table 12] below may respectively describe the aspheric coefficients of the plurality of lenses L1, L2, L3, L4, L5, and L6. The lens assembly 400 may satisfy the above-described conditions (and/or at least one of the above-described conditions) when the F-number Fno is approximately 2.288, the field of view ANG is approximately 115.42 degrees, the focal length is approximately 2.354mm, and the image height ImagH of the image sensor IS is approximately 3.263.

[Table 10]

| surface | Radius | Thickness | H-Ape | EFL | Nd | Vd |
|---|---|---|---|---|---|---|
| S1 | 14.73120 | 0.53500 | 1.40000 | -4.742 | 1.53500 | 55.75 |
| S2 | 2.14446 | 0.36000 | 0.71934 | | | |
| S3(Stop) | Infinity | 0.03787 | 0.54100 | | | |
| S4 | 6.14795 | 0.90884 | 0.57575 | 4.019 | 1.54401 | 55.91 |
| S5 | -3.23739 | -0.18000 | 0.80000 | | | |
| S6 | Infinity | 0.32676 | 0.82609 | | | |
| S7 | 2.18534 | 0.61680 | 1.02696 | 3.752 | 1.54401 | 55.91 |
| S8 | -29.72116 | 0.04891 | 1.10969 | | | |
| S9 | 36.50352 | 0.24218 | 1.11183 | -3.697 | 1.66066 | 20.37 |
| S10 | 2.30734 | 0.22352 | 1.41000 | | | |
| S11 | 3.79067 | 1.08058 | 1.72203 | 1.399 | 1.56717 | 37.4 |
| S12 | -0.90680 | 0.05000 | 2.05005 | | | |
| S13 | 2.80010 | 0.43000 | 2.06877 | -1.446 | 1.63491 | 23.97 |
| S14 | 0.65466 | 0.57560 | 2.72455 | | | |
| S15 | Infinity | 0.11 | 3.10124 | infinity | 1.51680 | 64.2 |
| S16 | Infinity | 0.39194 | 3.13814 | | | |
| img | Infinity | 0.02558 | 3.36900 | | | |

[Table 11]

| | S1 | S2 | S4 | S5 | S7 | S8 |
|---|---|---|---|---|---|---|
| **Radius** | 1.47312E+01 | 2.14446E+00 | 6.14795E+00 | -3.23739E+00 | 2.18534E+00 | -2.97212E+01 |
| **k(Conic)** | 0.00000E+00 | -4.08885E+01 | 0.00000E+00 | 9.35220E+00 | -2.29107E+01 | 0.00000E+00 |
| **A(4th)** | 1.45002E-01 | 1.11067E+00 | -1.04056E-01 | -4.23677E-01 | -3.76830E-02 | -3.62652E-02 |
| **B(6th)** | -1.53513E-01 | -1.45793E+01 | 2.53132E+00 | 7.18782E-01 | 2.17341E-02 | -1.35097E-01 |
| **C(8th)** | 6.94843E-01 | 3.33965E+02 | -4.76541E+01 | -2.29281E+00 | -8.63084E-01 | -4.21131E-01 |
| **D(10th)** | -2.84266E+00 | -5.34933E+03 | 5.25240E+02 | 5.78229E+00 | 3.45744E+00 | 3.66443E-02 |
| **E(12th)** | 7.93918E+00 | 5.88940E+04 | -3.63828E+03 | -9.06228E+00 | -8.14572E+00 | 7.78219E+00 |
| **F(14th)** | -1.50439E+01 | -4.57529E+05 | 1.58956E+04 | 7.77152E+00 | 1.20716E+01 | -2.47948E+01 |
| **G(16th)** | 1.95611E+01 | 2.56017E+06 | -4.24375E+04 | -2.77118E+00 | -1.07559E+01 | 3.58605E+01 |
| **H(18th)** | -1.73556E+01 | -1.04264E+07 | 6.30865E+04 | 0.00000E+00 | 5.26300E+00 | -2.76520E+01 |
| **I(20th)** | 1.01431E+01 | 3.09102E+07 | -3.99422E+04 | 0.00000E+00 | -1.08430E+00 | 1.09791E+01 |
| **J(22th)** | -3.50296E+00 | -6.59585E+07 | 0.00000E+00 | 0.00000E+00 | 0.00000E+00 | -1.75366E+00 |
| **K(24th)** | 4.21915E-01 | 9.86192E+07 | 0.00000E+00 | 0.00000E+00 | 0.00000E+00 | 0.00000E+00 |

(continued)

|  | S1 | S2 | S4 | S5 | S7 | S8 |
|---|---|---|---|---|---|---|
| **L(26th)** | 1.58489E-01 | -9.79980E+07 | 0.00000E+00 | 0.00000E+00 | 0.00000E+00 | 0.00000E+00 |
| **M(28th)** | -6.85086E-02 | 5.81019E+07 | 0.00000E+00 | 0.00000E+00 | 0.00000E+00 | 0.00000E+00 |
| **N(30th)** | 7.94270E-03 | -1.55467E+07 | 0.00000E+00 | 0.00000E+00 | 0.00000E+00 | 0.00000E+00 |

[Table 12]

|  | S9 | S10 | S11 | S12 | S13 | S14 |
|---|---|---|---|---|---|---|
| **Radius** | 3.65035E+0 1 | 2.30734E+0 0 | 3.79067E+0 0 | -9.06802E-01 | 2.80010E+0 0 | 6.54656E-01 |
| **k(Conic)** | 0.00000E+0 0 | -6.61229E+0 1 | 0.00000E+0 0 | -4.51301E+0 0 | -8.24615E+0 0 | -4.39287E+0 0 |
| **A(4th)** | -5.74832E-01 | 1.13241E-01 | 3.57489E-02 | 1.92307E-01 | -1.96193E-01 | -1.10998E-01 |
| **B(6th)** | 2.23293E+0 0 | -1.46519E+0 0 | 1.48492E-0 | -4.56894E-01 | 2.83947E-01 | 6.78911E-02 |
| **C(8th)** | -1.87022E+0 1 | 4.11463E+0 0 | -1.27298E+0 0 | 1.18040E+0 0 | -7.44107E-01 | -2.71867E-02 |
| **D(10th)** | 1.06925E+0 2 | -6.50735E+0 0 | 3.67472E+0 0 | -1.96085E+0 0 | 1.51675E+0 0 | -7.76897E-03 |
| **E(12th)** | -4.10828E+0 2 | 6.42962E+0 0 | -6.72929E+0 0 | 2.03383E+0 0 | -2.15633E+0 0 | 1.79241E-02 |
| **F(14th)** | 1.13454E+0 3 | -2.80275E+0 0 | 8.69121E+0 0 | -1.39988E+0 0 | 2.07221E+0 0 | -1.16624E-02 |
| **G(16th)** | -2.29199E+0 3 | -2.31418E+0 0 | -8.16430E+0 0 | 6.69468E-01 | -1.36065E+0 0 | 4.44737E-03 |
| **H(18th)** | 3.38084E+0 3 | 5.16301E+0 0 | 5.63307E+0 0 | -2.27833E-01 | 6.20767E-01 | -1.11931E-03 |
| **I(20th)** | -3.60813E+0 3 | -4.47773E+0 0 | -2.85005E+0 0 | 5.53743E-02 | -1.98250E-01 | 1.91876E-04 |
| **J(22th)** | 2.73868E+0 3 | 2.28151E+0 0 | 1.04367E+0 0 | -9.44064E-03 | 4.40270E-02 | -2.22466E-05 |
| **K(24th)** | -1.43291E+0 3 | -7.07779E-01 | -2.68828E-01 | 1.07619E-03 | -6.62917E-03 | 1.67205E-06 |
| **L(26th)** | 4.87759E+0 2 | 1.24067E-01 | 4.61315E-02 | -7.38117E-05 | 6.40784E-04 | -7.35662E-08 |
| **M(28th)** | -9.62572E+01 | -9.44835E-03 | -4.72870E-03 | 2.30560E-06 | -3.54767E-05 | 1.43811E-09 |
| **N(30th)** | 8.22579E+00 | 0.00000E+00 | 2.18792E-04 | 0.00000E+00 | 8.39401E-07 | 0.00000E+00 |

According to an embodiment, the lens assembly 400 may be configured with six lenses having negative, positive, negative, positive, negative, and positive refractive powers in order from the object side, and one filter F (e.g., an IR filter). Since the F-number Fno is approximately 2.288, the field of view is approximately 115 degrees, and performance may be secured for up to an image height of approximately 3.0mm to approximately 4.0mm, an optical system enabling application of a high-pixel sensor may be provided. In the embodiment illustrated in FIG. 13, the effective diameter of the first lens L1 relative to the image height (related to Formula 1) may be set to approximately 0.43, the slim factor (related to Formula 2) may be set to approximately 0.88, and a value for the position of the aperture stop within the lens assembly (related to Formula 5) may be set to approximately 0.19. Therefore, the embodiment illustrated in FIG. 13, which provides a wide-angle (or ultra-wide-angle) optical system with good various aberrations, may provide a lens assembly with a small head and a compact size, to which a high-pixel sensor is applied, and an electronic device including the same. FIG. 9 is a configuration diagram illustrating the lens assembly 300 according to an embodiment. FIG. 10 is a graph illustrating spherical aberration of the lens assembly 300 according to the embodiment of FIG. 9. FIG. 11 is a graph illustrating astigmatism of the lens assembly 300 according to the embodiment of FIG. 9. FIG. 12 is a graph illustrating distortion of the lens assembly 300 according to the embodiment of FIG. 9. Referring to FIGS. 9 to 12, the lens assembly 300 according to another embodiment of the disclosure may include a plurality of lenses L1, L2, L3, L4, L5, and L6, the image sensor IS, and/or the filter F. Unlike the foregoing embodiments with five lenses, the lens assembly 300 according to the embodiment of FIGS. 9 to 12 may include six lenses. In the above-described embodiments, various data of the lenses may be identified for the lens assemblies (e.g., 100, 200, 300, and 400) and/or the electronic devices including these lens assemblies. The data may satisfy the above-described conditions, such as the results of [Formula 1 to Formula 4].

# EP 4 700 452 A1

[Table 13]

|  | Embodiment 1 | Embodiment 2 | Embodiment 3 | Embodiment 4 |
|---|---|---|---|---|
| Formula 1 | 0.43 | 0.42 | 0.40 | 0.43 |
| Formula 2 | 0.89 | 0.88 | 0.86 | 0.88 |
| Formula 3 | 2.294 | 2.288 | 2.321 | 2.288 |
| Formula 5 | 0.23 | 0.22 | 0.25 | 0.19 |

In [Table 13] above, 'Embodiment 1' may refer to the lens assembly 100 illustrated in FIG. 1, 'Embodiment 2' may refer to the lens assembly 200 illustrated in FIG. 5, 'Embodiment 3' may refer to the lens assembly 300 illustrated in FIG. 9, and 'Embodiment 4' may refer to the lens assembly 400 illustrated in FIG. 13. The lens assemblies (e.g., 100, 200, 300, and 400) according to the above-described embodiments may be mounted and used in an electronic device (e.g., optical device). In addition to the image sensor IS, the electronic device (e.g., optical device) may further include an application processor (AP). Through the AP, for example, an operating system or application program may be run to control various hardware or software components connected to the AP, and perform various data processing and computations. For example, the AP may further include a graphic processing unit (GPU) and/or an image signal processor. When an image signal processor is included in the AP, an image (or video) obtained by the image sensor IS may be stored or output using the AP.

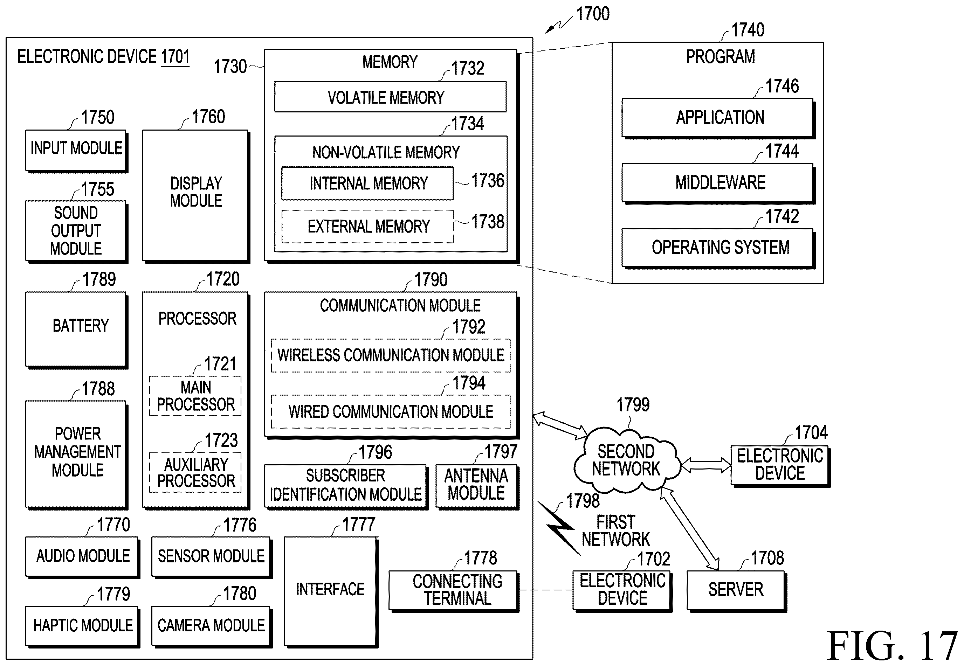

FIG. 17 is a block diagram illustrating an electronic device 1701 in a network environment 1700 according to an embodiment. Referring to FIG. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module(SIM) 1796, or an antenna module 1797. In some embodiments, at least one of the components (e.g., the connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to one embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, a HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to one embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth™, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to an embodiment, the antenna module 1797 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example.

The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

FIG. 18 is a block diagram 1800 (e.g., the camera module 1780 in FIG. 17) illustrating a camera module 1880 according to various embodiments. Referring to FIG. 18, the camera module 1880 may include a lens assembly 1810 (e.g., the lens assembly 100 in FIG. 1, the lens assembly 200 in FIG. 5, the lens assembly 300 in FIG. 9, and the lens assembly 400 in FIG. 13), the flash 1820, an image sensor 1830, the image stabilizer 1840, the memory 1850 (e.g., buffer memory) (e.g., the memory 1730 in FIG. 17), or the image signal processor 1860. The lens assembly 1810 may collect light emitted or reflected from an object whose image is to be taken. The lens assembly 1810 may include one or more lenses. According to an embodiment, the camera module 1880 may include a plurality of lens assemblies 1810. In such a case, the camera module 1880 may form, for example, a dual camera, a 360-degree camera, or a spherical camera. Some of the plurality of lens assemblies 1810 may have the same lens attribute (e.g., view angle, focal length, auto-focusing, f number, or optical zoom), or at least one lens assembly may have one or more lens attributes different from those of another lens assembly. The lens assembly 1810 may include, for example, a wide-angle lens or a telephoto lens.

The flash 1820 may emit light that is used to reinforce light reflected from an object. According to an embodiment, the flash 1820 may include one or more light emitting diodes (LEDs) (e.g., a red-green-blue (RGB) LED, a white LED, an infrared (IR) LED, or an ultraviolet (UV) LED) or a xenon lamp. The image sensor 1830 may obtain an image corresponding to an object by converting light emitted or reflected from the object and transmitted via the lens assembly 1810 into an electrical signal. According to an embodiment, the image sensor 1830 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1830 may be implemented using, for example, a charged coupled device (CCD) sensor or a complementary metal oxide semiconductor (CMOS) sensor.

The image stabilizer 1840 may move the image sensor 1830 or at least one lens included in the lens assembly 1810 in a particular direction, or control an operational attribute (e.g., adjust the read-out timing) of the image sensor 1830 in response to the movement of the camera module 1880 or the electronic device 1701 including the camera module 1880. This allows compensating for at least part of a negative effect by the movement on an image being captured. According to an embodiment, the image stabilizer 1840 may sense such a movement by the camera module 1880 or the electronic device 1701 using a gyro sensor (not shown) or an acceleration sensor (not shown) disposed inside or outside the camera module 1880. According to an embodiment, the image stabilizer 1840 may be implemented, for example, as an optical image stabilizer. The memory 1850 may store, at least temporarily, at least part of an image obtained via the image sensor 1830 for a subsequent image processing task. For example, if image capturing is delayed due to shutter lag or multiple images are quickly captured, a raw image obtained (e.g., a Bayer-patterned image, a high-resolution image) may be stored in the memory 1850, and its corresponding copy image (e.g., a low-resolution image) may be previewed via the display device 1760. Thereafter, if a specified condition is met (e.g., by a user's input or system command), at least part of the raw image stored in the memory 1850 may be obtained and processed, for example, by the image signal processor 1860. According to an embodiment, the memory 1850 may be configured as at least part of the memory 1830 or as a separate memory that is operated independently from the memory 1830.

The image signal processor 1860 may perform one or more image processing with respect to an image obtained via the image sensor 1830 or an image stored in the memory 1850. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1860 may perform control (e.g., exposure time control or read-out timing control) with respect to at least one (e.g., the image sensor 1830) of the components included in the camera module 1880. An image processed by the image signal processor 1860 may be stored back in the memory 1850 for further processing, or may be provided to an external component (e.g., the memory 1730, the display module 1760, the electronic device 1702, the electronic device 1704, or the server 1708) outside the camera module 1880. According to an embodiment, the image signal processor 1860 may be configured as at least part of the processor 1720, or as a separate processor that is operated independently from the processor 1720. If the image signal processor 1860 is configured as a separate processor from the processor 1720, at least one image processed by the image signal processor 1860 may be displayed, by the processor 1720, via the display module 1760 as it is or after being further processed.

According to an embodiment, the electronic device 1701 may include a plurality of camera modules 1880 having different attributes or functions. In such a case, at least one of the plurality of camera modules 1880 may form, for example, a wide-angle camera and at least another of the plurality of camera modules 1880 may form a telephoto camera. Similarly, at least one of the plurality of camera modules 1880 may form, for example, a front camera and at least another of the plurality of camera modules1880 may form a rear camera.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment of the disclosure, the electronic device 1701 may be provided, including: the lens assembly 100, 200, 300, or 400 comprising at least five lenses aligned along an optical axis direction from an object side to an image side, wherein the first lens L1 from the object side may have a negative refractive power, the second lens L2 from the object side may have a positive refractive power, and the first lens from the image side may have a negative refractive power; and the image sensor IS including the image plane img on which an image is formed. The lens assembly may satisfy the following [Formula 1] and [Formula 2].

[Formula 1]

$$0.3 < L1\,ape/ImagH < 0.45$$

[Formula 2]

$$TTL/ImagH*2 < 0.9$$

(where in [Formula 1], L1 ape is a half effective diameter of the first lens from the object side, and ImagH is an effective image height of the image sensor, and in [Formula 2], TTL is a distance from an object-side surface of the first lens from the object side to the image sensor).

According to an embodiment, the electronic device may satisfy the following [Formula 3] and [Formula 4].

[Formula 3]

$$2.0 < f/EPD < 2.4$$

[Formula 4]

$$FOV > 110$$

(where in [Formula 3], EPD is an entrance pupil of the lens assembly, and f is a composite focal length of the lens assembly, and in [Formula 4], FOV is a field of view of an entire optical system).

According to an embodiment, the electronic device may satisfy the following [Formula 5].

[Formula 5]

$$0.1 < TSt/TA < 0.26$$

(where in [Formula 5], TSt is a distance from the object-side surface of the first lens from the object side to an aperture stop, and TA is a distance from the object-side surface of the first lens from the object side to an image-side surface of the first lens from the image side).

According to an embodiment, the aperture stop may be disposed between the first lens from the object side and the second lens from the object side.

According to an embodiment, the first lens from the image side may comprise a surface facing the object side, which is convex towards the object side, and a surface facing the image side, which is concave towards the image side and comprise at least one inflection point.

According to an embodiment, the electronic device may satisfy the following [Formula 6].

[Formula 6]

$$N5 > 1.5$$

(where in [Formula 6], N5 is a refractive index of a fifth lens from the object side).

According to an embodiment, the electronic device may satisfy the following [Formula 7].

[Formula 7]

$$V1 < 57$$

(where in [Formula 7], V1 is an Abbe number of the first lens from the object side).

According to an embodiment, the electronic device may satisfy the following [Formula 8].

[Formula 8]

$$V2+V5 < 95$$

(where in [Formula 8], V2 is an Abbe number of the second lens from the object side, and V5 is an Abbe number of the fifth lens from the object side).

According to an embodiment, the electronic device may satisfy the following [Formula 9].

[Formula 9]

$$N3 > 1.6$$

(where in [Formula 9], N3 is a refractive index of a third lens from the object side).

According to an embodiment, the electronic device may satisfy the following [Formula 10].

[Formula 10]

$$V3+V4 < 80$$

(where in [Formula 10], V3 is an Abbe number of a third lens from the object side, and V4 is an Abbe number of a fourth lens from the object side).

According to an embodiment, the second lens from the object side may have an object-side surface convex from the object side and an image-side surface convex towards the image side.

According to an embodiment, the lens assembly may include a synthetic resin material.

According to an embodiment, the lens assembly may include six lenses and satisfy the following [Formula 11].

[Formula 11]

$$T34 < 0.152$$

(where in [Formula 11], T34 is an air gap between the third lens from the object side and the fourth lens from the object side in the lens assembly).

According to an embodiment, the lens assembly may include six lenses and satisfy the following [Formula 12].

[Formula 12]

$$T56 < 0.08$$

(where in [Formula 12], T56 is an air gap between a fifth lens from the object side and a sixth lens from the object side in the lens assembly).

According to an embodiment, the sixth lens from the object side may comprise inflection points on a surface thereof facing the object side and a surface thereof facing the object side.

According to an embodiment of the disclosure, the electronic device 1701 may be provided, including: the lens assembly 100 or 200 having the first lens L1, the second lens L2, the third lens L3, the fourth lens L4, and the fifth lens L5 which include a synthetic resin material and are aligned along an optical axis direction from an object side to an image side, wherein the first lens L1 may have a negative refractive power, the second lens L2 may have a positive refractive power, and the fifth lens may have a negative refractive power; and the image sensor IS including the image plane img on which an image is formed. The lens assembly may satisfy the following [Formula 1] and [Formula 2].

[Formula 1]

$$0.3 < L1\ ape/ImagH < 0.45$$

[Formula 2]

$$TTL/ImagH*2 < 0.9$$

(where in [Formula 1], L1 ape is a half effective diameter of the first lens from the object side, and ImagH is an effective image height of the image sensor, and in [Formula 2], TTL is a distance from a top surface of a lens barrel to the image sensor).

The electronic device may satisfy the following [Formula 3] and [Formula 4].

$$[Formula\ 3]$$

$$2.0 < f/EPD < 2.4$$

$$[Formula\ 4]$$

$$FOV > 110$$

(where in [Formula 3], EPD is an entrance pupil of the lens assembly, and f is a composite focal length of the lens assembly, and in [Formula 4], FOV is a field of view of an entire optical system).

An aperture stop may be disposed between the first lens from the object side and the second lens from the object side, and the electronic device may satisfy the following [Formula 5].

$$[Formula\ 5]$$

$$0.1 < TSt/TA < 0.26$$

(where in [Formula 5], TSt is a distance from the object-side surface of the first lens from the object side to an aperture stop, and TA is a distance from the object-side surface of the first lens from the object side to an image-side surface of the first lens from the image side).

According to an embodiment of the disclosure, the electronic device 1701 may be provided, including: the lens assembly 300 or 400 having the first lens L1, the second lens L2, the third lens L3, the fourth lens L4, the fifth lens L5, and the sixth lens L6 which include a synthetic resin material and are aligned along an optical axis direction from an object side to an image side, wherein the first lens L1 may have a negative refractive power, the second lens L2 may have a positive refractive power, and the six lens may have a negative refractive power; and the image sensor IS including the image plane img on which an image is formed. The lens assembly may satisfy the following [Formula 1] and [Formula 2].

$$[Formula\ 1]$$

$$0.3 < L1\ ape/ImagH < 0.45$$

$$[Formula\ 2]$$

$$TTL/ImagH*2 < 0.9$$

(where in [Formula 1], L1 ape is a half effective diameter of the first lens from the object side, and ImagH is an effective image height of the image sensor, and in [Formula 2], TTL is a distance from a top surface of a lens barrel to the image sensor).

The electronic device may satisfy the following [Formula 11] and [Formula 12].

$$[Formula\ 11]$$

$$T34 < 0.152$$

$$[Formula\ 12]$$

$$T56 < 0.08$$

(where in [Formula 11], T34 is an air gap between the third lens from the object side and the fourth lens from the object side in the lens assembly, and in [Formula 12], T56 is an air gap between the fifth lens from the object side and the sixth lens from the object side in the lens assembly).

Therefore, although specific embodiments of the disclosure have been described above in detail, it will be apparent to those skilled in the art that various modifications are possible without departing from the scope of the disclosure. For example, in specific embodiments of the disclosure, the dimensions of the plurality of lenses may be appropriately set according to the structure and required specifications of an actually manufactured lens assembly or an electronic device on which the lens assembly is to be mounted, and an actual use environment.

**Claims**

1. An electronic device (1701) comprising:

   a lens assembly (100; 200; 300; 400) comprising at least five lenses aligned along an optical axis direction from an object side to an image side, wherein a first lens (L1) from the object side has a negative refractive power, a second lens (L2) from the object side has a positive refractive power, and a first lens from the image side has a negative refractive power; and
   an image sensor (IS) including an image plane (img) on which an image is formed,
   wherein the lens assembly satisfies the following [Formula 1] and [Formula 2],

   $$[\text{Formula 1}]$$

   $$0.3 < \text{L1 ape/ImagH} < 0.45$$

   $$[\text{Formula 2}]$$

   $$\text{TTL/(ImagH*2)} < 0.9$$

   (where in [Formula 1], L1 ape is a half effective diameter of the first lens from the object side, and ImagH is an effective image height of the image sensor, and in [Formula 2], TTL is a distance from an object-side surface of the first lens from the object side to the image sensor).

2. The electronic device of claim 1, wherein the electronic device satisfies the following [Formula 3] and [Formula 4],

   $$[\text{Formula 3}]$$

   $$2.0 < \text{f/EPD} < 2.4$$

   $$[\text{Formula 4}]$$

   $$\text{FOV} > 110$$

   (where in [Formula 3], EPD is an entrance pupil of the lens assembly, and f is a composite focal length of the lens assembly, and in [Formula 4], FOV is a field of view of an entire optical system).

3. The electronic device of claim 1 or 2, wherein the electronic device satisfies the following [Formula 5],

   $$[\text{Formula 5}]$$

   $$0.1 < \text{TSt/TA} < 0.26$$

   (where in [Formula 5], TSt is a distance from the object-side surface of the first lens from the object side to an aperture stop, and TA is a distance from the object-side surface of the first lens from the object side to an image-side surface of the first lens from the image side).

4. The electronic device of any one of claims 1 to 3, wherein the aperture stop is disposed between the first lens from the object side and the second lens from the object side.

5. The electronic device of any one of claims 1 to 4, wherein the first lens from the image side comprises a surface facing the object side, which is convex towards the object side, and a surface facing the image side, which is concave towards the image side and comprises at least one inflection point.

6. The electronic device of any one of claims 1 to 5, wherein the electronic device satisfies the following [Formula 6],

[Formula 6]

$$N5 > 1.5$$

(where in [Formula 6], N5 is a refractive index of a fifth lens from the object side).

7. The electronic device of claim 6, wherein the electronic device satisfies the following [Formula 7],

[Formula 7]

$$V1 < 57$$

(where in [Formula 7], V1 is an Abbe number of the first lens from the object side).

8. The electronic device of claim 6, wherein the electronic device satisfies the following [Formula 8],

[Formula 8]

$$V2+V5 < 95$$

(where in [Formula 8], V2 is an Abbe number of the second lens from the object side, and V5 is an Abbe number of the fifth lens from the object side).

9. The electronic device of any one of claims 1 to 8, wherein the electronic device satisfies the following [Formula 9],

[Formula 9]

$$N3 > 1.6$$

(where in [Formula 9], N3 is a refractive index of a third lens from the object side).

10. The electronic device of claim 8, wherein the electronic device satisfies the following [Formula 10],

[Formula 10]

$$V3+V4 < 80$$

(where in [Formula 10], V3 is an Abbe number of a third lens from the object side, and V4 is an Abbe number of a fourth lens from the object side).

11. The electronic device of any one of claims 1 to 10, wherein the second lens from the object side comprising an object-side surface convex from the object side and an image-side surface convex towards the image side.

12. The electronic device of any one of claims 1 to 11, wherein the lens assembly includes a synthetic resin material.

13. The electronic device of any one of claims 1 to 12, wherein the lens assembly includes six lenses and satisfies the following [Formula 11],

[Formula 11]

$$T34 < 0.152$$

(where in [Formula 11], T34 is an air gap between the third lens from the object side and the fourth lens from the object side in the lens assembly).

14. The electronic device of any one of claims 1 to 13, wherein the lens assembly includes six lenses and satisfies the following [Formula 12],

[Formula 12]

$$T56 < 0.08$$

(where in [Formula 12], T56 is an air gap between a fifth lens from the object side and a sixth lens from the object side in the lens assembly).

15. The electronic device of any one of claims 12 to 14, wherein the sixth lens from the object side comprises inflection points on a surface thereof facing the object side and a surface thereof facing the object side.

FIG. 1

LONGITUDINAL SPHERICAL ABER.

FIG. 2

ASTIGMATIC FIELD CURVES
IMG HT

DISTORTION
IMG HT

FOCUS (mm)

DISTORTION (%)

# FIG. 3

# FIG. 4

FIG. 5

LONGITUDINAL SPHERICAL ABER.

| | 656.2725 NM |
|---|---|
| | 587.5618 NM |
| | 546.0740 NM |
| | 486.1327 NM |
| | 435.8343 NM |

FOCUS (mm)

FIG. 6

ASTIGMATIC FIELD CURVES

IMG HT

FIG. 7

DISTORTION

IMG HT

3.27

2.53

1.68

0.84

-20.0   -10.0   0.0   10.0   20.0

DISTORTION (%)

# FIG. 8

FIG. 9

LONGITUDINAL SPHERICAL ABER.

FIG. 10

ASTIGMATIC FIELD CURVES

IMG HT

S ─── T

3.27

2.53

1.68

0.84

-0.050  -0.025   0.0   0.025  0.050

FOCUS (mm)

# FIG. 11

DISTORTION

IMG HT

3.27

2.53

1.68

0.84

-20.0   -10.0   0.0   10.0   20.0

DISTORTION (%)

# FIG. 12

FIG. 13

LONGITUDINAL SPHERICAL ABER.

| | |
|---|---|
| —————— | 656.2725 NM |
| — — — — | 587.5618 NM |
| ————— | 546.0740 NM |
| ·············· | 486.1327 NM |
| ————— | 435.8343 NM |

FOCUS (mm)

# FIG. 14

ASTIGMATIC FIELD CURVES

FIG. 15

DISTORTION

IMG HT

3.27

2.53

1.68

0.84

-20.0   -10.0   0.0   10.0   20.0

DISTORTION (%)

# FIG. 16

FIG. 17

1800

1880

CAMERA MODULE

1820

FLASH

1810

1830

IMAGE SENSOR

LENS ASSEMBLY

1840

IMAGE STABILIZER

1850

MEMORY

1860

IMAGE SIGNAL PROCESSOR

FIG. 18

## INTERNATIONAL SEARCH REPORT

| International application No. |
|---|
| **PCT/KR2024/005554** |

| A. | CLASSIFICATION OF SUBJECT MATTER |
|---|---|

**G02B 13/00**(2006.01)i; **G02B 9/60**(2006.01)i; **G02B 1/04**(2006.01)i; **H04N 23/55**(2023.01)i; **G03B 9/02**(2006.01)i

According to International Patent Classification (IPC) or to both national classification and IPC

| B. | FIELDS SEARCHED |
|---|---|

Minimum documentation searched (classification system followed by classification symbols)

G02B 13/00(2006.01); G02B 13/04(2006.01); G02B 13/06(2006.01); G02B 13/18(2006.01); G02B 27/00(2006.01); G02B 9/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 제6 렌즈(sixth lens), 굴절력(refractive power), 유효경 (effective radius), 상고(image height), TTL(total track length)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0062431 A (SAMSUNG ELECTRO-MECHANICS CO., LTD.) 31 May 2021 (2021-05-31)<br>See paragraphs [0002], [0014]-[0028], [0056]-[0064] and [0127]-[0128] and figures 1-2. | 1-2,4-12,15 |
| X | JP 2019-105719 A (KANTATSU CO., LTD.) 27 June 2019 (2019-06-27)<br>See paragraphs [0001]-[0002] and [0061]-[0075] and figure 1. | 1,3,13 |
| X | US 2020-0057268 A1 (LARGAN PRECISION CO., LTD.) 20 February 2020 (2020-02-20)<br>See paragraphs [0003], [0048]-[0053] and [0119]-[0129] and figure 7. | 1,14 |
| A | JP 2019-105720 A (KANTATSU CO., LTD.) 27 June 2019 (2019-06-27)<br>See paragraphs [0057] and [0082]-[0085] and figure 10. | 1-15 |
| A | CN 216622822 U (ZHEJIANG SUNNY OPTICAL CO., LTD.) 27 May 2022 (2022-05-27)<br>See paragraphs [0128]-[0156] and figure 3. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 July 2024** | **31 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/005554** |

| Patent document cited in search report | | | Publication date (day/month/year) | Patent family member(s) | | | Publication date (day/month/year) |
| --- | --- | --- | --- | --- | --- | --- | --- |
| KR | 10-2021-0062431 | A | 31 May 2021 | CN | 112824952 | A | 21 May 2021 |
| | | | | CN | 112824952 | B | 15 July 2022 |
| | | | | CN | 115032767 | A | 09 September 2022 |
| | | | | CN | 213659079 | U | 09 July 2021 |
| | | | | KR | 10-2022-0024360 | A | 03 March 2022 |
| | | | | KR | 10-2023-0016696 | A | 02 February 2023 |
| | | | | KR | 10-2368760 | B1 | 02 March 2022 |
| | | | | KR | 10-2491440 | B1 | 26 January 2023 |
| | | | | KR | 10-2609155 | B1 | 05 December 2023 |
| | | | | US | 2021-0157102 | A1 | 27 May 2021 |
| JP | 2019-105719 | A | 27 June 2019 | CN | 109917533 | A | 21 June 2019 |
| | | | | CN | 109917533 | B | 24 November 2020 |
| | | | | CN | 208888460 | U | 21 May 2019 |
| | | | | JP | 6684033 | B2 | 22 April 2020 |
| | | | | US | 10935767 | B2 | 02 March 2021 |
| | | | | US | 11442247 | B2 | 13 September 2022 |
| | | | | US | 11442248 | B2 | 13 September 2022 |
| | | | | US | 2019-0179118 | A1 | 13 June 2019 |
| | | | | US | 2020-0409115 | A1 | 31 December 2020 |
| | | | | US | 2020-0409116 | A1 | 31 December 2020 |
| US | 2020-0057268 | A1 | 20 February 2020 | CN | 110837175 | A | 25 February 2020 |
| | | | | CN | 110837175 | B | 07 June 2022 |
| | | | | CN | 114706196 | A | 05 July 2022 |
| | | | | CN | 114706196 | B | 12 March 2024 |
| | | | | CN | 114721129 | A | 08 July 2022 |
| | | | | CN | 114721129 | B | 03 October 2023 |
| | | | | CN | 114721130 | A | 08 July 2022 |
| | | | | CN | 114721130 | B | 03 October 2023 |
| | | | | CN | 114721132 | A | 08 July 2022 |
| | | | | CN | 114721132 | B | 27 February 2024 |
| | | | | CN | 114740606 | A | 12 July 2022 |
| | | | | CN | 114740606 | B | 30 May 2023 |
| | | | | CN | 114815162 | A | 29 July 2022 |
| | | | | CN | 114815162 | B | 30 June 2023 |
| | | | | CN | 116699811 | A | 05 September 2023 |
| | | | | CN | 116699812 | A | 05 September 2023 |
| | | | | TW | 202009536 | A | 01 March 2020 |
| | | | | TW | I663442 | B | 21 June 2019 |
| | | | | US | 11194127 | B2 | 07 December 2021 |
| JP | 2019-105720 | A | 27 June 2019 | CN | 109917532 | A | 21 June 2019 |
| | | | | CN | 109917532 | B | 24 November 2020 |
| | | | | CN | 208888459 | U | 21 May 2019 |
| | | | | JP | 6680445 | B2 | 15 April 2020 |
| | | | | US | 10809498 | B2 | 20 October 2020 |
| | | | | US | 11442249 | B2 | 13 September 2022 |
| | | | | US | 11474327 | B2 | 18 October 2022 |
| | | | | US | 11644640 | B2 | 09 May 2023 |
| | | | | US | 2019-0179119 | A1 | 13 June 2019 |
| | | | | US | 2020-0409118 | A1 | 31 December 2020 |
| | | | | US | 2020-0409119 | A1 | 31 December 2020 |

Form PCT/ISA/210 (patent family annex) (July 2022)

**INTERNATIONAL SEARCH REPORT**
Information on patent family members

International application No.

**PCT/KR2024/005554**

| Patent document cited in search report | Publication date (day/month/year) | Patent family member(s) | Publication date (day/month/year) |
|---|---|---|---|
| | | US 2020-0409120 A1 | 31 December 2020 |
| CN 216622822 U | 27 May 2022 | None | |

Form PCT/ISA/210 (patent family annex) (July 2022)